(19) Europäisches Patentamt / European Patent Office / Office européen des brevets

(11) **EP 2 965 444 B1**

(12) **EUROPEAN PATENT SPECIFICATION**

(45) Date of publication and mention
of the grant of the patent:
**04.12.2019 Bulletin 2019/49**

(51) Int Cl.:
*H04B 7/04* (2017.01)   *H04L 1/06* (2006.01)
*H04B 7/06* (2006.01)

(21) Application number: **14759886.6**

(22) Date of filing: **10.03.2014**

(86) International application number:
**PCT/KR2014/001947**

(87) International publication number:
**WO 2014/137203 (12.09.2014 Gazette 2014/37)**

(54) **PRECODING MATRIX CODEBOOK DESIGN FOR ADVANCED WIRELESS COMMUNICATIONS SYSTEMS**

VORCODIERUNGSMATRIX-CODEBUCHENTWURF FÜR FORTSCHRITTLICHE DRAHTLOSKOMMUNIKATIONSSYSTEME

CONCEPTION DE LIVRE DE CODE DE MATRICE DE PRÉCODAGE POUR DES SYSTÈMES DE COMMUNICATION SANS FIL AVANCÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2013 US 201361775231 P**
**26.04.2013 US 201361816416 P**
**07.06.2013 US 201361832632 P**
**12.06.2013 US 201361834269 P**
**23.01.2014 US 201461930887 P**
**06.03.2014 US 201414199793**

(43) Date of publication of application:
**13.01.2016 Bulletin 2016/02**

(73) Proprietor: **Samsung Electronics Co., Ltd.**
**Suwon-si, Gyeonggi-do 443-742 (KR)**

(72) Inventors:
• **XIN, Yan**
**Richardson, TX 75082 (US)**
• **NAM, Young-Han**
**Richardson, TX 75082 (US)**
• **RAHMAN, Md Saifur**
**Richardson, TX 75082 (US)**
• **ZHANG, Jianzhong**
**Richardson, TX 75082 (US)**

(74) Representative: **Nederlandsch Octrooibureau**
**P.O. Box 29720**
**2502 LS The Hague (NL)**

(56) References cited:
KR-A- 20080 074 965    KR-A- 20110 003 251
US-A1- 2009 232 240    US-A1- 2009 322 613
US-A1- 2012 039 251    US-A1- 2012 207 243
US-A1- 2013 010 880

• JUNYI WANG ET AL.: 'Beamforming Codebook Design and Performance Evaluation for 60GHz Wideband WPANs' VEHICULAR TECHNOLOGY CONFERENCE FALL (VTC 2009-FALL), 2009 IEEE 70TH, [Online] 2009, pages 1 - 6, XP055240853 Retrieved from the Internet: <URL:http://ieeexplore.ieee.org/xpl/article Details.jsp?tp=&arnumber=5379063 &querTText%3D11059365>

**Description**

**BACKGROUND OF THE INVENTION**

1. Field of the Invention

The present application relates generally to wireless communication systems and, more specifically, to scheduling of data transmissions.

2. Description of the Related Art

A communication system includes a DownLink (DL) that conveys signals from transmission points such as Base Stations (BSs) or NodeBs to User Equipments (UEs) and an UpLink (UL) that conveys signals from UEs to reception points such as NodeBs. A UE, also commonly referred to as a terminal or a mobile station, may be fixed or mobile and may be a cellular phone, a personal computer device, and the like. A NodeB, which is generally a fixed station, may also be referred to as an access point or other equivalent terminology.

Existing 4-Tx codebook in Release 11 does not perform well for a cross-polarized (XP) antenna setup, which is a commonly used antenna setup in practice. The target of the enhanced 4-Tx codebook design is to improve performance for narrowly-spaced and widely-spaced cross-polarized antenna setups.

A two-dimensional (2-D) active antenna array can be used for advanced communication systems such as full dimension multiple input multiple output (FD-MIMO) systems. In a 2-D active antenna array, antenna elements are placed in the vertical and horizontal directions. Codebooks designed for 2-D active antenna array contain two components corresponding to the horizontal and vertical components of underlying channel models.

Published patent application US 2009/322613 A1 discloses a method and apparatus to support single user (SU) and multiuser (MU) beamforming with antenna array groups. The method and apparatus are used to precode a plurality of data streams, beamform each of the data streams, and provide each of the beamformed data streams to one of a plurality of antenna array groups.

Published patent application US 2012/039251 A1 relates to method for two component feedback in wireless communication system wherein a wireless communication device sends a first representation of a first matrix chosen from a first codebook. Finally, published patent application US 2013/010880 A1 discloses a mechanism providing a flexible feedback framework operating in different scenarios, such as heterogeneous network deployments.

**SUMMARY OF THE INVENTION**

This disclosure provides a system and method for performing a precoding matrix codebook design for use in advanced communications systems.

In a first embodiment, a method is provided. The method includes transmitting, by a base station (BS) via antenna array, a plurality of signals to at least one user equipment (UE). The method also includes applying a codebook to the plurality of signals prior to transmitting, wherein the codebook is designed with one-dimensional 4-Tx and two-dimensional $M \times N$ antenna elements.

In a second embodiment, a base station is provided. The base station includes a two dimensional (2D) antenna array comprising a number M of antenna elements and N antenna ports configured in a 2D grid NH x NV, the 2D antenna array configured to communicate with at least one subscriber station. The base station also includes a controller configured to apply a codebook to the signal, wherein the codebook is designed with one-dimensional 4-Tx and two-dimensional $M \times N$ antenna elements.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a wireless network according to embodiments of the present disclosure;
FIGURE 2A illustrates a high-level diagram of a wireless transmit path according to embodiments of the present disclosure;
FIGURE 2B illustrates a high-level diagram of a wireless receive path according to embodiments of the present disclosure;
FIGURE 3 illustrates a user equipment according to embodiments of the present disclosure;
FIGURE 4 illustrates 4-Tx cross-polarized antenna configuration according to embodiments of the present disclosure;
FIGURE 5 illustrates $4H \times 4V$ cross-polarized antenna configuration in FD-MIMO according to embodiments of the present disclosure;
FIGURE 6 illustrates beam gains for 4-Tx codebook design;
FIGURE 7 illustrates 2-dimensional (2-D) uniform rectangular array according to embodiments of the present disclosure;
FIGURE 8A illustrates 1-dimensional (1-D) co-polarized antenna array according to embodiments of the present disclosure;
FIGURE 8B illustrates RF chain for each antenna port according to embodiments of the present disclosure;
FIGURE 9 illustrates digital precoding operation according to embodiments of the present disclosure;
FIGURE 10 illustrates 2-D cross-polarized antenna array according to embodiments of the present disclosure;
FIGURE 11 illustrates closed-loop MIMO systems according to embodiments of the present disclosure;
FIGURE 12 illustrates beam gains of 3-bit non-evenly oversampled DFT vectors according to embodiments of the present disclosure;
FIGURE 13 illustrates beam gains of 3-bit evenly oversampled DFT vectors according to embodiments of the present disclosure;
FIGURE 14 illustrates beam gains of 4-bit non-evenly oversampled 4-Tx DFT matrix according to embodiments of the present disclosure;
FIGURE 15A and 15B illustrate a 2D co-polarized antenna array according to embodiments of the present disclosure;
FIGURE 16 illustrates a 2D cross-polarized antenna array according to embodiments of the present disclosure;
FIGURE 17 illustrates two co-polarized arrays constructed from the 2D cross-polarized array according to embodiments of the present disclosure;
FIGURE 18 illustrates the definition of angle $\alpha$ according to embodiments of the present disclosure;
FIGURE 19 illustrates the relationship between angles $\alpha_o$ and $\theta_0$ according to embodiments of the present disclosure;
FIGURE 20 illustrates the feasible region of $\theta$ and $\alpha$ according to embodiments of the present disclosure;
FIGURE 21 illustrates the dependency of the exponents $v$ and $h$ when $\varphi_0 \in [-\pi, \pi]$ according to embodiments of the present disclosure;
FIGURE 22 illustrates a high-rise scenario according to embodiments of the present disclosure; and
FIGURE 23 illustrates quantization of cosine values of the elevation angles according to embodiments of the present disclosure.

## DETAILED DESCRIPTION OF EMBODIMENTS OF THE INVENTION

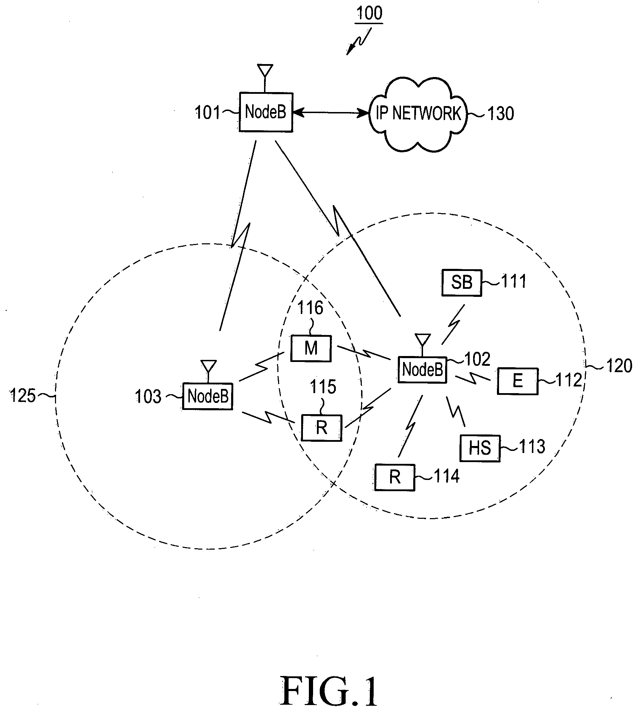

FIGURES 1 through 23, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged cellular system.

FIGURE 1 illustrates a wireless network 100 according to one embodiment of the present disclosure. The embodiment of wireless network 100 illustrated in FIGURE 1 is for illustration only. Other embodiments of wireless network 100 could be used without departing from the scope of this disclosure.

The wireless network 100 includes NodeB 101, NodeB 102, and NodeB 103. NodeB 101 communicates with NodeB 102 and NodeB 103. NodeB 101 also communicates with Internet protocol (IP) network 130, such as the Internet, a proprietary IP network, or other data network.

Depending on the network type, other well-known terms may be used instead of "NodeB", such as "eNodeB" or "eNB," "transmission point" (TP), "base station" (BS), "access point" (AP), or "eNodeB" (eNB). For the sake of convenience, the term NodeB shall be used herein to refer to the network infrastructure components that provide wireless access to remote terminals.

For the sake of convenience, the term "user equipment" or "UE" is used herein to designate any remote wireless equipment that wirelessly accesses a NodeB, whether the UE is a mobile device (e.g., cell phone) or is normally considered a stationary device (e.g., desktop personal computer, vending machine, etc.). Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses a NodeB, whether the UE is a mobile device (such as a mobile telephone or smartphone) or is normally considered a stationary device (such as a desktop computer or vending machine).

NodeB 102 provides wireless broadband access to network 130 to a first plurality of user equipments (UEs) within coverage area 120 of NodeB 102. The first plurality of UEs includes UE 111, which may be located in a small business; UE 112, which may be located in an enterprise; UE 113, which may be located in a WiFi hotspot; UE 114, which may be located in a first residence; UE 115, which may be located in a second residence; and UE 116, which may be a mobile device, such as a cell phone, a wireless laptop, a wireless PDA, or the like. UEs 111-116 may be any wireless communication device, such as, but not limited to, a mobile phone, mobile PDA and any mobile station (MS). NodeB 103 provides wireless broadband access to a second plurality of UEs within coverage area 125 of NodeB 103. The second plurality of UEs includes UE 115 and UE 116. In some embodiments, one or more of NodeBs 101-103 can communicate with each other and with UEs 111-116 using 5G, LTE, LTE-A, WiMAX, or other advanced wireless communication techniques as described in embodiments of the present disclosure.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

As described in more detail below, one or more of NodeB 102 and NodeB 103 includes processing circuitry, such as transmit circuitry, configured to perform precoding matrix codebook design for advanced wireless communications systems.

Although FIGURE 1 depicts one example of a wireless network 100, various changes may be made to FIGURE 1. For example, another type of data network, such as a wired network, may be substituted for wireless network 100. In a wired network, network terminals may replace NodeBs 101-103 and UEs 111-116. Wired connections may replace the wireless connections depicted in FIGURE 1.

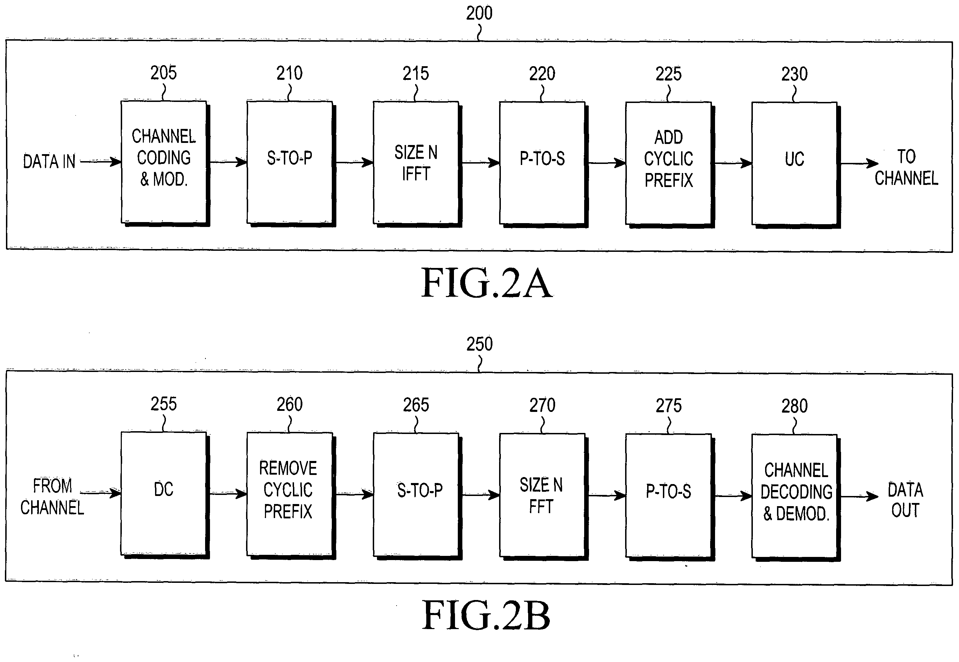

FIGURE 2A is a high-level diagram of a wireless transmit path. FIGURE 2B is a high-level diagram of a wireless receive path. In FIGURES 2A and 2B, the transmit path 200 may be implemented, e.g., in NodeB 102 and the receive path 250 may be implemented, e.g., in a UE, such as UE 116 of FIGURE 1. It will be understood, however, that the receive path 250 could be implemented in a NodeB (e.g., NodeB 102 of FIGURE 1) and the transmit path 200 could be implemented in a UE. In certain embodiments, transmit path 200 and receive path 250 are configured to perform methods for uplink control channel multiplexing in beamformed cellular systems as described in embodiments of the present disclosure. Each of the eNBs 101-103 can include a processor, or processing circuitry, configured to perform methods for precoding matrix codebook design for advanced wireless communications systems, as described in embodiments of the present disclosure.

Transmit path 200 comprises channel coding and modulation block 205, serial-to-parallel (S-to-P) block 210, Size N Inverse Fast Fourier Transform (IFFT) block 215, parallel-to-serial (P-to-S) block 220, add cyclic prefix block 225, and up-converter (UC) 230. Receive path 250 comprises down-converter (DC) 255, remove cyclic prefix block 260, serial-to-parallel (S-to-P) block 265, Size N Fast Fourier Transform (FFT) block 270, parallel-to-serial (P-to-S) block 275, and channel decoding and demodulation block 280.

At least some of the components in FIGURES 2A and 2B may be implemented in software while other components may be implemented by configurable hardware (e.g., one or more processors) or a mixture of software and configurable hardware. In particular, it is noted that the FFT blocks and the IFFT blocks described in this disclosure document may be implemented as configurable software algorithms, where the value of Size N may be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It will be appreciated that in an alternate embodiment of the disclosure, the Fast Fourier Transform functions and the Inverse Fast Fourier Transform functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 2, 3, 4, etc.), while for FFT and IFFT functions, the value of the N variable may be any integer number that is a power of two (i.e., 1, 2, 4, 8, 16, etc.).

In transmit path 200, channel coding and modulation block 205 receives a set of information bits, applies coding (e.g., turbo coding) and modulates (e.g., Quadrature Phase Shift Keying (QPSK) or Quadrature Amplitude Modulation (QAM)) the input bits to produce a sequence of frequency-domain modulation symbols. Serial-to-parallel block 210 converts (i.e., de-multiplexes) the serial modulated symbols to parallel data to produce N parallel symbol streams where N is the IFFT/FFT size used in NodeB 102 and UE 116. Size N IFFT block 215 then performs an IFFT operation on the N parallel symbol streams to produce time-domain output signals. Parallel-to-serial block 220 converts (i.e., multiplexes) the parallel time-domain output symbols from Size N IFFT block 215 to produce a serial time-domain signal. Add cyclic prefix block 225 then inserts a cyclic prefix to the time-domain signal. Finally, up-converter 230 modulates (i.e., up-converts) the output of add cyclic prefix block 225 to RF frequency for transmission via a wireless channel. The signal may also be filtered at baseband before conversion to RF frequency.

The transmitted RF signal arrives at UE 116 after passing through the wireless channel and reverse operations to those at NodeB 102 are performed. Down-converter 255 down-converts the received signal to baseband frequency and remove cyclic prefix block 260 removes the cyclic prefix to produce the serial time-domain baseband signal. Serial-to-parallel block 265 converts the time-domain baseband signal to parallel time domain signals. Size N FFT block 270 then performs an FFT algorithm to produce N parallel frequency-domain signals. Parallel-to-serial block 275 converts the parallel frequency-domain signals to a sequence of modulated data symbols. Channel decoding and demodulation block 280 demodulates and then decodes the modulated symbols to recover the original input data stream.

Each of NodeBs 101-103 may implement a transmit path that is analogous to transmitting in the downlink to UEs 111-116 and may implement a receive path that is analogous to receiving in the uplink from UEs 111-116. Similarly, each one of UEs 111-116 may implement a transmit path corresponding to the architecture for transmitting in the uplink to NodeBs 101-103 and may implement a receive path corresponding to the architecture for receiving in the downlink from NodeBs 101-103.

Each of the components in FIGURES 2A and 2B can be implemented using only hardware or using a combination of hardware and software/firmware. As a particular example, at least some of the components in FIGURES 2A and 2B may be implemented in software, while other components may be implemented by configurable hardware or a mixture of software and configurable hardware. For instance, the FFT block 270 and the IFFT block 215 may be implemented as configurable software algorithms, where the value of size N may be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURES 2A and 2B illustrate examples of wireless transmit and receive paths, various changes may be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architectures could be used to support wireless communications in a wireless network.

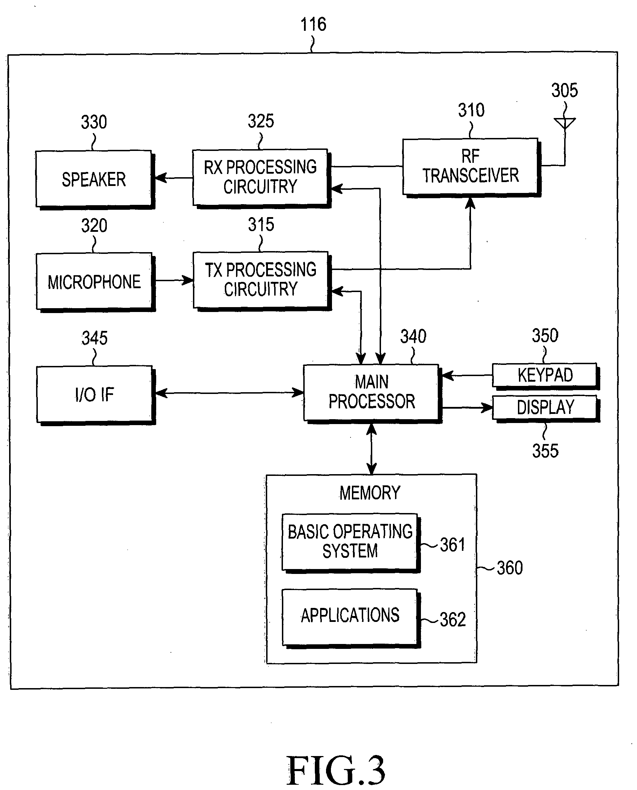

FIGURE 3 illustrates a UE according to embodiments of the present disclosure. The embodiment of user equipment, such as UE 116, illustrated in FIGURE 3 is for illustration only. Other embodiments of the wireless subscriber station could be used without departing from the scope of this disclosure. Although MS 116 is depicted by way of example, the description of FIGURE 3 can apply equally to any of UE 111, UE 112, UE 113, UE 114 and UE 115.

UE 116 comprises antenna 305, radio frequency (RF) transceiver 310, transmit (TX) processing circuitry 315, microphone 320, and receive (RX) processing circuitry 325. UE 116 also comprises speaker 330, main processor 340, input/output (I/O) interface (IF) 345, keypad 350, display 355, and memory 360. Memory 360 further comprises basic operating system (OS) program 361 and a plurality of applications 362.

Radio frequency (RF) transceiver 310 receives from antenna 305 an incoming RF signal transmitted by a NodeB of wireless network 100. Radio frequency (RF) transceiver 310 down-converts the incoming RF signal to produce an intermediate frequency (IF) or a baseband signal. The IF or baseband signal is sent to receiver (RX) processing circuitry 325 that produces a processed baseband signal by filtering, decoding, and/or digitizing the baseband or IF signal. Receiver (RX) processing circuitry 325 transmits the processed baseband signal to speaker 330 (such as for voice data) or to main processor 340 for further processing (such as for web browsing data).

Transmitter (TX) processing circuitry 315 receives analog or digital voice data from microphone 320 or other outgoing baseband data (e.g., web data, e-mail, interactive video game data) from main processor 340. Transmitter (TX) processing circuitry 315 encodes, multiplexes, and/or digitizes the outgoing baseband data to produce a processed baseband or IF signal. Radio frequency (RF) transceiver 310 receives the outgoing processed baseband or IF signal from transmitter (TX) processing circuitry 315. Radio frequency (RF) transceiver 310 up-converts the baseband or IF signal to a radio frequency (RF) signal that is transmitted via antenna 305.

In certain embodiments, main processor 340 is a microprocessor or microcontroller. Memory 360 is coupled to main processor 340. According to some embodiments of the present disclosure, part of memory 360 comprises a random access memory (RAM) and another part of memory 360 comprises a Flash memory, which acts as a read-only memory (ROM).

Main processor 340 can be comprised of one or more processors and executes basic operating system (OS) program 361 stored in memory 360 in order to control the overall operation of wireless subscriber station 116. In one such operation, main processor 340 controls the reception of forward channel signals and the transmission of reverse channel signals by radio frequency (RF) transceiver 310, receiver (RX) processing circuitry 325, and transmitter (TX) processing circuitry 315, in accordance with well-known principles. Main processor 340 can include processing circuitry configured to allocate one or more resources. For example Main processor 340 can include allocator processing circuitry configured to allocate a unique carrier indicator and detector processing circuitry configured to detect a PDCCH scheduling a PDSCH reception of a PUSCH transmission in one of the $C$ carriers.

Main processor 340 is capable of executing other processes and programs resident in memory 360, such as operations for precoding matrix codebook design for advanced wireless communications systems as described in embodiments of the present disclosure. Main processor 340 can move data into or out of memory 360, as required by an executing process. In some embodiments, the main processor 340 is configured to execute a plurality of applications 362, such as applications for MU-MIMO communications, including obtaining control channel elements of PDCCHs. Main processor 340 can operate the plurality of applications 362 based on OS program 361 or in response to a signal received from BS 102. Main processor 340 is also coupled to I/O interface 345. I/O interface 345 provides subscriber station 116 with the ability to connect to other devices such as laptop computers and handheld computers. I/O interface 345 is the communication path between these accessories and main controller 340.

Main processor 340 is also coupled to keypad 350 and display unit 355. The operator of subscriber station 116 uses keypad 350 to enter data into subscriber station 116. Display 355 may be a liquid crystal display capable of rendering text and/or at least limited graphics from web sites. Alternate embodiments may use other types of displays.

Although FIGURE 3 illustrates one example of UE 116, various changes may be made to FIGURE 3. For example, various components in FIGURE 3 could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

A NodeB transmits a PDCCH in units referred to as Control Channel Elements (CCEs). The NodeB, such as NodeB 102 or NodeB 103, transmits one or more of multiple types of RS including a UE-Common RS (CRS), a Channel State Information RS (CSI-RS), and a DeModulation RS (DMRS). The CRS is transmitted over substantially a DL system BandWidth (BW) and can be used by the UEs, such as UE 116, to demodulate data or control signals or to perform measurements. The UE 116 can determine a number of NodeB antenna ports from which a CRS is transmitted through a broadcast channel transmitted from the NodeB. To reduce the CRS overhead, the NodeB can transmit a CSI-RS with a smaller density in the time and/or frequency domain than the CRS. The UE can determine the CSI-RS transmission parameters through higher layer signaling from the NodeB. The DMRS is transmitted only in the BW of a respective PDSCH and a UE can use the DMRS to demodulate the information in the PDSCH.

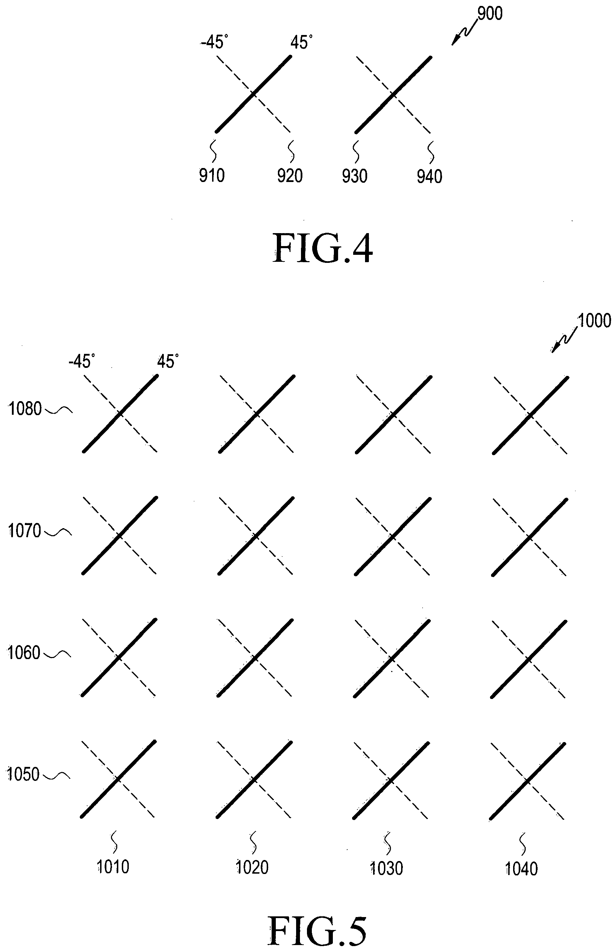

FIGURE 4 illustrates a 4 transmit (4-Tx) cross polarized (XP) antenna setup according to embodiments of the present disclosure. The embodiment of the 4-Tx XP antenna setup 900 shown in FIGURE 4 is for illustration only. Other embodiments could be used without departing from the scope of the present disclosure.

Embodiments of the 4-Tx XP antenna setup 900 are commonly used antenna setup in practice. Embodiments of the 4-Tx XP antenna setup 900 include two pairs of transmit antennas, each of which comprises one antenna (910 or 930) with polarization direction +45 degree and the other antenna (920 or 940) with polarization direction -45 degree. That is, a first pair of antenna includes a first antenna 910 with polarization direction +45° and a second antenna 920 with polarization direction -45°. In addition, a second pair of antenna includes a third antenna 930 with polarization direction +45° and a fourth antenna 940 with polarization direction -45°.

FIGURE 5 illustrates a BS antenna array equipped with $4 \times 4$ cross-polarized active antenna elements according to embodiments of the present disclosure. The embodiment of the antenna array 1000 shown in FIGURE 5 is for illustration only. Other embodiments could be used without departing from the scope of the present disclosure.

In the example, shown in FIGURE 5, the antenna array 1000 includes antenna pairs arranged in rows 1010, 1020, 1030, 1040 and columns 1050, 1060, 1070, 1080. Each column includes 4 pairs of cross-polarized antenna elements and each row includes 4 pairs cross-polarized antenna elements. In each pair of cross-polarized antennas, a first antenna has a +45° polarization while the second antenna has -45° polarization.

A communication system consists of a downlink (DL), where signals are transmitted from base station (BS), NodeBs or transmission point (TP) to user equipment (UE), and an uplink (UL), where signals are transmitted from UE to BS or NodeB. For example, in the DL, NodeB 102 can transmit signals to UE 116. In the UL, UE 116 can transmit signals to NodeB 102.

A precoding matrix $W$ Release 10 8-Tx codebook can be written as a product of two precoding matrices, called inner and outer precoders, respectively. The inner precoder has a block-diagonal structure and is used to capture the wide-band and long-term channel properties while the outer precoder is used to capture the frequency-selective and short-term channel properties. Mathematically, the precoding matrix $W$ can be expressed as $W = W_1 W_2$, where $W_1$ and $W_2$ denote the inner and outer precoders, respectively. Such structure is also called double codebook $W_1 W_2$ structure. The inner precoder $W_1$ has the following block diagonal structure:

$$W_1 = \begin{bmatrix} X & 0 \\ 0 & X \end{bmatrix}. \tag{2}$$

A 4-Tx codebook design based on the 8-Tx double codebook $W_1 W_2$ design principle is proposed. In particular, the inner precoder $W_1$ follows the same structure as given in equation (2), where $X$ is a $2 \times 1$ vector chosen from the following set:

$$X \in \left\{ \begin{bmatrix} 1 \\ e^{\frac{j2\pi n}{16}} \end{bmatrix}, \ n = 0,1,\dots,15 \right\} \tag{3}$$

for rank 1 and 2. For rank1, the outer precoder $W_2$ is chosen from the following set:

$$W_2 \in \left\{ \begin{bmatrix} 1 \\ 1 \end{bmatrix}, \ \begin{bmatrix} 1 \\ -1 \end{bmatrix}, \begin{bmatrix} 1 \\ j \end{bmatrix}, \begin{bmatrix} 1 \\ -j \end{bmatrix} \right\} \tag{4}$$

and for rank 2, the outer precoder $W_2$ is chosen from the following set:

$$W_2 \in \left\{ \begin{bmatrix} 1 & 1 \\ 1 & -1 \end{bmatrix}, \begin{bmatrix} 1 & 1 \\ j & -j \end{bmatrix} \right\}. \tag{5}$$

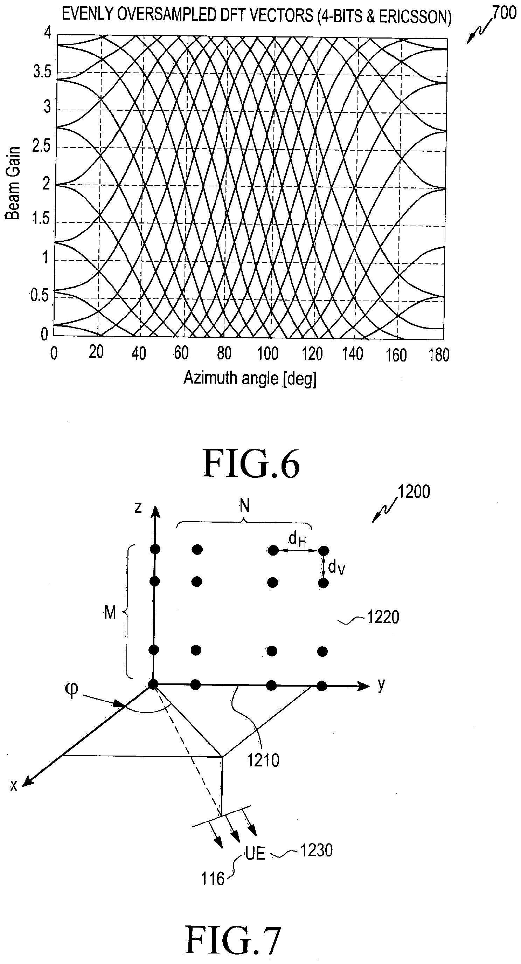

For rank 1, the overhead for transmitting PMI of $W_1$ and PMI of $W_2$ are 4 bits and 2 bits, respectively. For rank 2, the overhead for transmitting PMI of $W_1$ and PMI of $W_2$ are 4 bits and 1-bit, respectively. FIGURE 6 illustrates example beam gains of 4-Tx codebook designs according to REF 5.

FIGURE 7 illustrates an azimuth angle and an elevation angle (also called the zenith angle) according to embodiments of the present disclosure. The embodiment of the azimuth angle and the elevation angle shown in FIGURE 7 is for illustration only. Other embodiments could be used without departing from the scope of the present disclosure. More specifically, the azimuth angle $\varphi$ is defined as the angle between the positive x-axis direction and the project vector of a straight line between NodeB 102 and UE 116 to the xy plane while the elevation angle is defined as the angle between the positive z-axis and a straight line between NodeB 102 and UE 116.

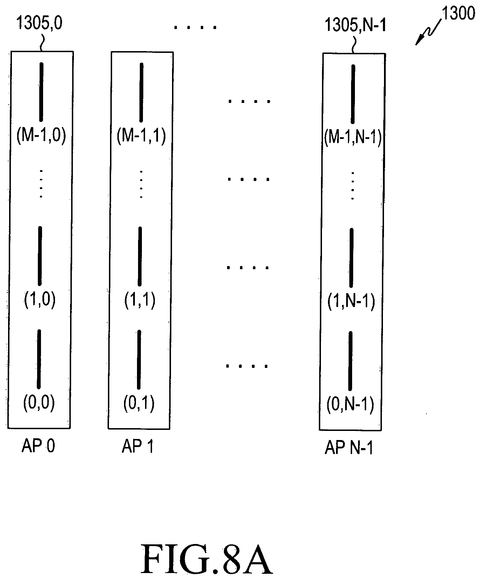

FIGURE 8A illustrates 1-D co-polarized antenna array, where $N$ virtual antenna ports, i.e., antenna ports (APs) 0 to $N$-1 are placed on a substantially horizontal axis according to embodiments of the present disclosure. The embodiment of the 1-D co-polarized antenna array 1300 shown in FIGURE 8A is for illustration only. Other embodiments could be used without departing from the scope of the present disclosure. In the example shown in FIGURE 8A, each of antenna ports is constructed with a number of physical antennas, e.g., 1305,0.

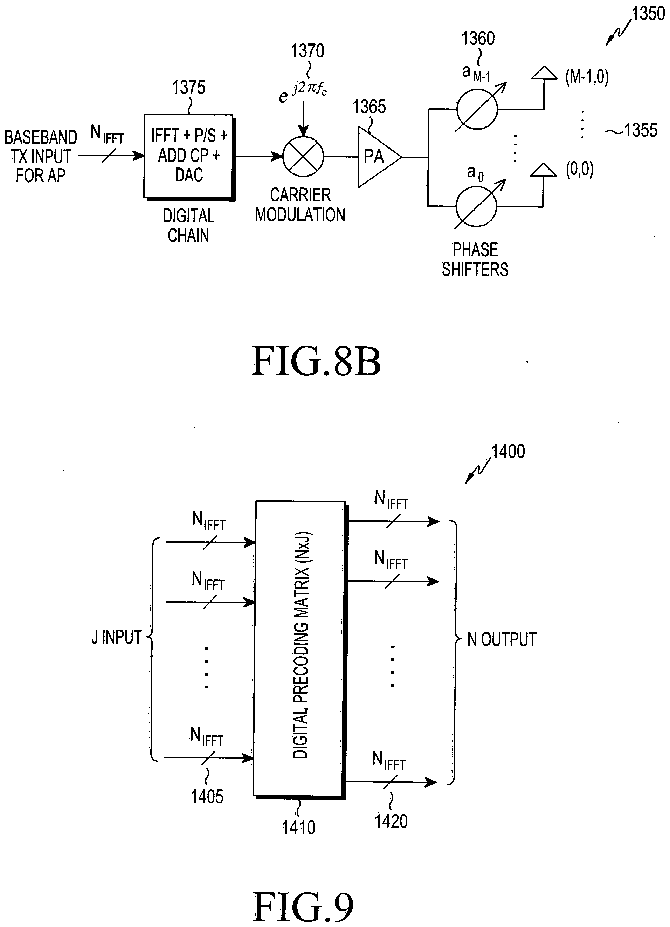

FIGURE 8B illustrates an example in which each antenna port is mapped to $M$ antennas placed on a substantially vertical axis 1355 according to embodiments of the present disclosure. The embodiment of the antenna port mapping 1350 shown in FIGURE 8B is for illustration only. Other embodiments could be used without departing from the scope of the present disclosure. Each of the $M$ antennas comprising an antenna port is connected to a phase shifter 1360. For each antenna port, a power amplifier block 1365 is connected right after a carrier modulation block 1370, the signal outputs of which are split into these M phase shifters. Baseband transmit antenna input for each antenna port of size $N_{IFFT}$ goes through an OFDM digital chain 1375, comprising IFFT, P/S, add CP and DAC.

FIGURE 9 illustrates a digital precoding operation according to embodiments of the present disclosure. The embodiment of the digital precoding operation 1400 shown in FIGURE 9 is for illustration only. Other embodiments could be used without departing from the scope of the present disclosure. In the example shown in FIGURE 9, $J$ input signals with $J \leq N$ 1405 are input into digital precoding matrix 1410. The baseband Tx input signals 1420 for the $N$ antenna ports are constructed by pre-multiplying a ($N$x$J$) digital precoding matrix 1410 to $J$ input signals with $J \leq N$ 1405.

In the present disclosure, $f_c$ is defined as the carrier frequency and $\lambda_c$ as the corresponding wavelength of the carrier frequency $f_c$. A time domain baseband equivalent model $h(\tau)$ observed at a receive antenna at a UE is given by

$$c(\tau) = \sum_{l=0}^{L-1} \alpha_l a^H(h_l) \delta(\tau - \tau_l) e^{j2\pi f_c \tau_l} \qquad (6),$$

where $L$ is defined as the number of multiple paths, $\alpha_l$ denotes the a complex number associated with the $l$ th path, $\theta_l$ is the azimuth angle of the $l$ th path, $a(h_l)$ is a $M \times 1$ steering vector defined as $a(h_l) = \llcorner 1 e^{-jh_l} \ldots e^{-j(M-1)} \lrcorner$ with

$h_l := \frac{2\pi d_V}{\lambda_c} \cos\theta_l,$ and $\tau_l$ is defined as propagation delay of the $l$th path. When the steering vector $a(h_l)$ with

$h_l := \frac{2\pi d_V}{\lambda_c} \cos\theta_l$ is applied to $M$ elements comprising an antenna port, the signal emitted from the antenna array will have a beam steered to a direction of $\theta_l$ in the elevation domain. Accordingly, the frequency domain representation for the model described in (1) is given by:

$$H(f) = \sum_{l=0}^{L-1} \alpha_l a^H(h_l) e^{-j2\pi(f-f_c)\tau_l}. \qquad (7)$$

The spatial covariance matrix of the channel $H(f)$ at a specific frequency is defined as:

$$R_H = E[|\alpha_0|^2][a(h_0)a^H(h_0)]. \qquad (8)$$

Correspondingly, the most dominant eigenvector of $R_H$ is $c = \beta a(h_0)$ with $\beta$ being the power normalizing factor.

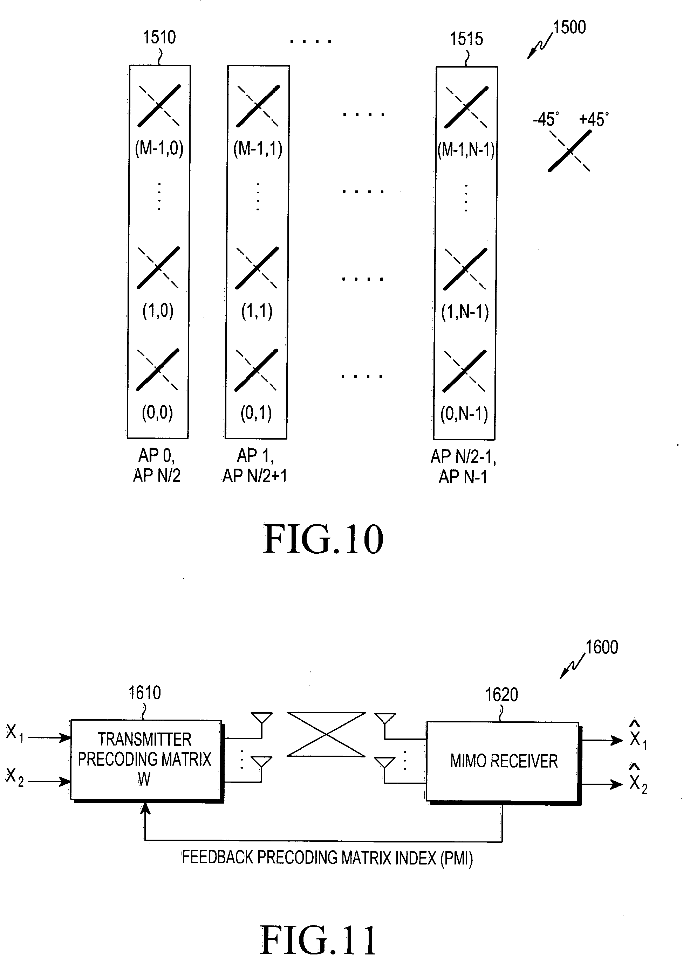

FIGURE 10 illustrates 2-D cross-polarized antenna array according to embodiments of the present disclosure. The embodiment of the 2-D cross-polarized antenna array 1500 shown in FIGURE 10 is for illustration only. Other embodiments could be used without departing from the scope of the present disclosure.

In the LTE Releases 10 and 12, a 8-Tx codebook and a 4-Tx enhanced codebook are respectively specified in the standards. The 8-Tx codebook in Release 10 and the 4-Tx enhanced codebook in Release 12 were designed for cross-polarized antenna as illustrated in FIGURE 10. In the cross-polarized antenna systems, each column of antenna elements includes M pairs of antennas, wherein each pair comprises a first antenna having polarization direction is +45°, and a second antenna having polarization direction is -45°. Those $M$ antennas having the same polarization direction in each column comprise an antenna port. For example, for the leftmost column, AP 0 shown in FIGURE 10, antenna port 1510 comprises those M antenna elements with +45° polarization, and AP $N/2-1$ shown in FIGURE 10, antenna port 1515 comprises those M antenna elements with -45° polarization. Those M antenna elements comprising an antenna port can be fed by an RF chain, such as RF chain 1350 shown in FIGURES 8A and 8B. The codebook for this cross-polarized antenna system is designed based upon a double-codebook structure, where a code word (a precoding matrix) $W$ can be expressed as a product of two precoding matrices $W_1$ and $W_2$, i.e., $W = W_1 W_2$. More specifically, the inner precoding matrix $W_1$ is used to capture the long term and wide-band channel characteristics and the outer precoding matrix $W_2$ is used to capture the short term and frequency selective channel characteristics. The rank-1 $W_1$ in the 8-Tx double codebook in Release 10 and the 4-Tx enhanced double codebook Release 12 comprises discrete Fourier transform (DFT) vectors (see REF3), intending to align with the beam steering vector $a(h_0)$ to be applied for the co-polarized elements (i.e., either of +45° polarized elements or -45° polarized elements in FIGURE 7) in the azimuth domain, taking a form of DFT vectors. In addition, the Release 8 4-Tx codebook also contains DFT vectors as codewords.

NodeB 102 transmits cell-specific reference signals (CRS) to facilitate its serving UEs' demodulation of control signals, estimation of channel state information (CSI), and demodulation of data carried on physical downlink shared channels (PDSCH). NodeB 102 also can configure CSI reference signals (CSI-RS) to facilitate UEs CSI estimation. Upon processing reference signals, either CRS or CSI-RS, UE 116 estimates CSI, which comprises at least one of precoding matrix indicator (PMI), rank indicator (RI), and channel quality indicator (CQI). UE 116 then feeds back the estimated CSI over physical uplink control channel (PUCCH) using Format 2/2a/2b with a payload size up to 11 bits or over physical uplink shared channel (PUSCH) without payload size limitation, dependent upon eNB's (or higher-layer configuration). The PUCCH feedback is often configured with fixed period, while the PUSCH feedback is dynamically triggered by NodeB 102 via CSI triggering bit(s) carried in a uplink downlink control information (DCI) transmitted on physical downlink control channels (PDCCH).

FIGURE 11 illustrates a close-loop MIMO system according to embodiments of the present disclosure. The embodiment of the close-loop MIMO system 1600 shown in FIGURE 11 is for illustration only. Other embodiments could be used without departing from the scope of the present disclosure.

A transmitter 1610 applies a precoding matrix $\boldsymbol{W}$ to input signals $X_1$ $X_2$ and transmits a signal to receiver 1620. The receiver 1620 in the closed-loop MIMO system estimates the channels, searches the best precoding matrix, and feedback PMI and other information to the transmitter. It is well-known that the channel state information (CSI) at transmitter 1610 can be used to improve the performance of MIMO systems. In the frequency division duplexing (FDD) systems, acquring CSI at the transmitter 1610 requires feedback from the receiver 1620. In particular, PMI is an important type of CSI, which is needed to be fed back to the transmitter 1610 with good accuracy. Alternatively, accurate PMI feedback requires large communication overhead, which will degrade the system performance. Therefore, an appropriate precoding codebook designs plays an important role in achieving desirable performance and overhead tradeoff.

In certain embodiments, in the proposed 4-Tx codebook design, the same double codebook $\boldsymbol{W_1 W_2}$ structure is used to obtain a new 4-Tx codebook, e.g., $\boldsymbol{W} = \boldsymbol{W_1 W_2}$. In existing enhanced 4-Tx codebook designs (see REF 3 and REF 4), the beam vectors in $\boldsymbol{X}$ are obtained by evenly oversampling 4-Tx DFT vectors, i.e.,

$$X \in \left\{ \begin{bmatrix} 1 \\ e^{\frac{j2\pi n}{16}} \end{bmatrix}, \ n = 0,1,\ldots,15 \right\}.$$ Unlike existing designs in (see REF 3 and REF 4), the design of beam vectors are obtained by oversampling 4-Tx DFT vectors unevenly. For 3-bit $\boldsymbol{W_1}$ codebook, the following designs $\begin{bmatrix} \boldsymbol{X} & 0 \\ 0 & \boldsymbol{X} \end{bmatrix}$ are

provided wherein the 8 possible values of $\boldsymbol{X}$ are chosen from $\left\{ \begin{bmatrix} 1 \\ e^{\frac{j2\pi n}{16}} \end{bmatrix}, \ n = 0,1,\ldots,15 \right\}.$ One example construction of these 8 possible values of $\boldsymbol{X}$ are shown below:

$$X \in \left\{ \begin{bmatrix} 1 \\ 1 \end{bmatrix}, \begin{bmatrix} 1 \\ e^{\frac{j2\pi}{16}} \end{bmatrix}, \begin{bmatrix} 1 \\ e^{\frac{j2\pi 2}{16}} \end{bmatrix}, \begin{bmatrix} 1 \\ e^{\frac{j2\pi 5}{16}} \end{bmatrix}, \begin{bmatrix} 1 \\ e^{\frac{j2\pi 10}{16}} \end{bmatrix}, \begin{bmatrix} 1 \\ e^{\frac{j2\pi 13}{16}} \end{bmatrix}, \begin{bmatrix} 1 \\ e^{\frac{j2\pi 14}{16}} \end{bmatrix}, \begin{bmatrix} 1 \\ e^{\frac{j2\pi 15}{16}} \end{bmatrix} \right\}. \qquad (9)$$

Since there are 8 possible inner precoders, the overhead for the feedback of $W_1$ is 3-bits.

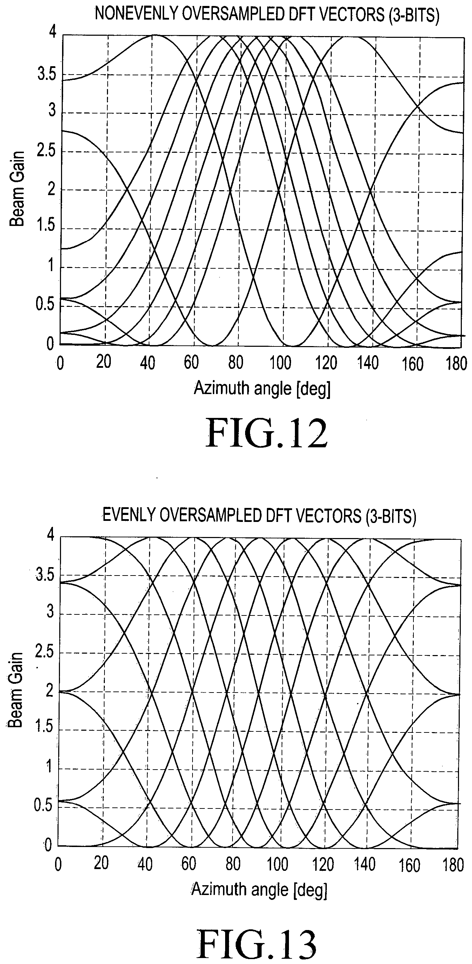

FIGURE 12 illustrates beam gains with respect to the azimuth angular spread according to embodiments of the present disclosure. The embodiment of the beam gains shown in FIGURE 12 is for illustration only. Other embodiments could be used without departing from the scope of the present disclosure. For example, the beam gains with respect to the azimuth angular spread shown in FIGURE 12 are for the proposed 4-Tx codebook design above. The outer precoders for rank 1 and rank 2 are selected as ones proposed in REF 3. Another example construction of the 3-bit 4-Tx codebook is based on evenly sampled DFT vectors as follows $X \in \left\{ \begin{bmatrix} 1 \\ e^{\frac{j2\pi n}{8}} \end{bmatrix}, \right.$ $n = 0,1, \ldots,7\}$. The proposed 3-bit codebook has the approximately same resolution for UE 116 located within angular spread around spread around 90 degree as 4-bit codebook proposed in REF 3. As compared with FIGURE 13, which illustrates evenly oversampled DFT vectors, beam vectors in near 0 and 180 degrees (vectors represented by $\left\{ \begin{bmatrix} 1 \\ e^{\frac{j2\pi n}{16}} \end{bmatrix}, \ n = 5,10 \right\})$ with lower density. If UEs are densely located within small angular spread centering at 90 degree, embodiments of the proposed 3-bit codebook yield a similar performance as the evenly oversampled 4-bit 4-Tx DFT codebook.

In certain embodiments, the codebook for $\boldsymbol{X}$ is subset of $\left\{ \begin{bmatrix} 1 \\ e^{\frac{j2\pi n}{16}} \end{bmatrix}, \right.$ $n = 0,1,..,15$, where the subset comprises 8 distinct vectors indexed by 8 distinct $n$ values. The subset includes two groups of distinct vectors, where one group has $N_1$ elements and the other group has $N_2$ elements, $N_1 + N_2 = 8$. The first group that includes $N_1$ elements has floor($N_1$/2) (or alternatively ceiling($N_1$/2)) consecutive integers increasing from 0 for $n$, and ceiling($N_1$/2) (or alternatively floor($N_1$/2)) consecutive integers decreasing from 15 for $n$. The $N_2$ elements included in the second group are coarsely sampled numbers from the integer numbers from floor($N_1$/2) to 16-ceiling($N_1$/2) (or alternatively ceiling($N_1$/2) to 16-floor($N_1$/2)). Embodiments of this method can be easily generalized for arbitrary set of

$$\left\{ \begin{bmatrix} 1 \\ e^{\frac{j2\pi n}{N}} \end{bmatrix}, \ n = 0,1,\ldots,N-1 \right\},$$ where $N$ is $2^k$, and $k$ is a positive integer.

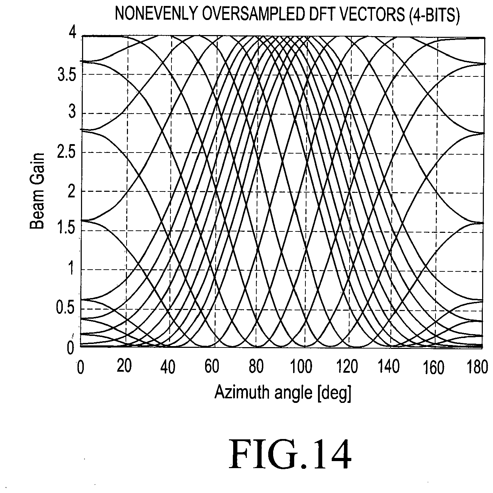

In certain embodiments, for 4-bit 4-Tx codebook, the design of beam vectors that are obtained by oversampling 4-Tx DFT vectors unevenly. For 4-bit 4-Tx $\boldsymbol{W}_1$ codebook, the following designs $\boldsymbol{W}_1 = \begin{bmatrix} X & 0 \\ 0 & X \end{bmatrix}$ with $\boldsymbol{X}$ chosen from the following set, which is illustrated in FIGURE 14:

$$X \in \left\{ \begin{array}{l} \begin{bmatrix}1\\1\end{bmatrix}, \begin{bmatrix}1\\e^{\frac{j2\pi}{32}}\end{bmatrix}, \begin{bmatrix}1\\e^{\frac{j2\pi2}{32}}\end{bmatrix}, \begin{bmatrix}1\\e^{\frac{j2\pi3}{32}}\end{bmatrix}, \begin{bmatrix}1\\e^{\frac{j2\pi4}{32}}\end{bmatrix}, \begin{bmatrix}1\\e^{\frac{j7\pi}{16}}\end{bmatrix}, \begin{bmatrix}1\\e^{\frac{j10\pi}{16}}\end{bmatrix}, \begin{bmatrix}1\\e^{\frac{j13\pi}{16}}\end{bmatrix}, \\[4mm] \begin{bmatrix}1\\e^{\frac{j16\pi}{16}}\end{bmatrix}, \begin{bmatrix}1\\e^{\frac{j19\pi}{16}}\end{bmatrix}, \begin{bmatrix}1\\e^{\frac{j22\pi}{16}}\end{bmatrix}, \begin{bmatrix}1\\e^{\frac{j25\pi}{16}}\end{bmatrix}, \begin{bmatrix}1\\e^{\frac{j2\pi28}{32}}\end{bmatrix}, \begin{bmatrix}1\\e^{\frac{j2\pi29}{32}}\end{bmatrix}, \begin{bmatrix}1\\e^{\frac{j2\pi30}{32}}\end{bmatrix}, \begin{bmatrix}1\\e^{\frac{j2\pi31}{32}}\end{bmatrix} \end{array} \right\} \quad (10).$$

Considering the oversampling factor is a power of 2, the n-bit 4-Tx inner precoders are designed based on unevenly oversampled DFT vectors. The inner precoder $\boldsymbol{W}_1$ has the same block diagonal structure as Equation (1). The vector $\boldsymbol{X}$ is obtained as follows, where $N = 2^n$ and $\Delta = \frac{3N+2}{N+2}$. The vector $\boldsymbol{X}$ is chosen from the following set:

$$X \left\{ \begin{bmatrix}1\\e^{\frac{j2\pi l}{2N}}\end{bmatrix}, \text{for } l = 0, \dots, \frac{N}{4} - 1, or \begin{bmatrix}1\\e^{\frac{j2\pi l}{2N}}\end{bmatrix}, l = \frac{7N}{4}, \dots, 2N - 1, \begin{bmatrix}1\\e^{j\frac{2\pi}{2N}\left(\left(\frac{N}{4}-1\right)+k\Delta\right)}\end{bmatrix} \right\}, k = 1,\dots,N2 \quad (11).$$

In this embodiment, beam vectors are restricted to the set that contains the beam vectors are oversampled by a factor of 2 to a power. This construction leads denser beam distribution centering at 90° and sparser beam distribution near 0 and 180°. The outer precoder $\boldsymbol{W}_2$ is selected as the same as ones in REF 3 for rank 1 and rank 2. Note that this design does not assume Embodiment 1 and Embodiment 2 as special cases. For example, for $n = 4$, the vector $\boldsymbol{X}$ is chosen from the following set

$$X \left\{ \begin{array}{l} \begin{bmatrix}1\\1\end{bmatrix}, \begin{bmatrix}1\\e^{\frac{j2\pi}{32}}\end{bmatrix}, \begin{bmatrix}1\\e^{\frac{j2\pi2}{32}}\end{bmatrix}, \begin{bmatrix}1\\e^{\frac{j2\pi3}{32}}\end{bmatrix}, \begin{bmatrix}1\\e^{\frac{j2\pi(3+\Delta)}{32}}\end{bmatrix}, \begin{bmatrix}1\\e^{\frac{j2\pi(3+2\Delta)}{32}}\end{bmatrix}, \begin{bmatrix}1\\e^{\frac{j2\pi(3+3\Delta)}{32}}\end{bmatrix}, \begin{bmatrix}1\\e^{\frac{j2\pi(3+4\Delta)}{32}}\end{bmatrix}, \\[4mm] \begin{bmatrix}1\\e^{\frac{j2\pi(3+5\Delta)}{32}}\end{bmatrix}, \begin{bmatrix}1\\e^{\frac{j2\pi(3+6\Delta)}{32}}\end{bmatrix}, \begin{bmatrix}1\\e^{\frac{j2\pi(3+7\Delta)}{32}}\end{bmatrix}, \begin{bmatrix}1\\e^{\frac{j2\pi(3+8\Delta)}{32}}\end{bmatrix}, \begin{bmatrix}1\\e^{\frac{j2\pi28}{32}}\end{bmatrix}, \begin{bmatrix}1\\e^{\frac{j2\pi29}{32}}\end{bmatrix}, \begin{bmatrix}1\\e^{\frac{j2\pi30}{32}}\end{bmatrix}, \begin{bmatrix}1\\e^{\frac{j2\pi31}{32}}\end{bmatrix} \end{array} \right\}$$

$$(12).$$

where $\Delta = \frac{25}{9}$.

Consider more general choices for the beam vector $\boldsymbol{X}$ as compared with Embodiment 3. For the n-bit design, beam vectors $\boldsymbol{X}$ are selected from the following set

$$X \in \left\{ \begin{bmatrix}1\\e^{j2\pi s(n)}\end{bmatrix}, \text{for } n = 0, \dots, N - 1 \right\}, \quad (13).$$

Where $s(n)$ denotes a real sequence of $N$ elements. In particular, the sequence $s(n)$ can be a sequence of rational numbers, which can be expressed as $s(n) = \frac{p_n}{q_n}$, $n = 0, \dots, N - 1$, with $p_n$, $q_n$ being integers.

Consider the 4-Tx codebook designs for 4 bit $\boldsymbol{W}_1$ and 4 bit $\boldsymbol{W}_2$ for rank-1 and rank-2 subject to the following restrictions:

the number of beams $N_b$ in each $\boldsymbol{W_1}$ is restricted to 2 or 4, and
the precoding matrices $\boldsymbol{W_1}$ are the same for both rank 1 and rank 2.

The target antenna configurations for this embodiment are both closely-spaced and widely-spaced cross-polarized 4-Tx antennas. Taking into account performances in both closely-spaced and widely-spaced cross-polarized 4-Tx antennas, each group of $N_b$ beams consists of so called almost parallel beams (angle between 2 beams is close to 0 degree) and orthogonal beams (angle between 2 beams is 90 degree). Considering slow time-varying channel effects and edge effects of sub-band frequency-selective precoding, 0, 1 or 2 overlapping beams are allowed between $\boldsymbol{W_k}$ and $\boldsymbol{W_{k+1}}$. For $N_b = 4$, express

$$\boldsymbol{W_1} \text{ as } \boldsymbol{W_1} = \begin{bmatrix} \boldsymbol{X_k} & 0 \\ 0 & \boldsymbol{X_k} \end{bmatrix}, k = 0,1,2,\ldots,15. \tag{15}$$

Design for 4 bit $\boldsymbol{W_1}$ with $N_b = 4$ and Define the vector $\mathbf{u}_k$ as:

$$\mathbf{u}_k = \begin{bmatrix} 1 \\ q_1^k \end{bmatrix} \text{ with } q_1 = e^{j2\pi/Q_1}. \tag{16}$$

For $Q_1 = 16$ ,
**[0072]** **Option** A1: In this option, the matrix $\boldsymbol{X_k}$ is selected to be:

$$\boldsymbol{X_k} = \{[\boldsymbol{u}_{k \bmod 16} \ \boldsymbol{u}_{(k+1) \bmod 16} \ \boldsymbol{u}_{(k+2) \bmod 16} \ \boldsymbol{u}_{(k+9) \bmod 16}]\}, k = 0,\ldots,15. \tag{17}$$

In this design, there are two overleaping beams between $\boldsymbol{X_k}$ and $\boldsymbol{X_{k+1}}$. For each $\boldsymbol{X_k}$, a pair of orthogonal beams, i.e., $\boldsymbol{u}_{(k+1) \bmod 16}$ and $\boldsymbol{u}_{(k+9) \bmod 16}$, and three beams $\boldsymbol{u}_{k \bmod 16} \ \boldsymbol{u}_{(k+1) \bmod 16} \ \boldsymbol{u}_{(k+2) \bmod 16}$ are almost parallel.
**Option** A2: In this option, the matrix $\boldsymbol{X_k}$ is selected to be:

$$\boldsymbol{X_k} = \{[\boldsymbol{u}_{k \bmod 16} \ \boldsymbol{u}_{(k+1) \bmod 16} \ \boldsymbol{u}_{(k+8) \bmod 16} \ \boldsymbol{u}_{(k+9) \bmod 16}]\}, k = 0,\ldots,15. \tag{18}$$

In this design, there is a single overleaping beams between $\boldsymbol{X_k}$ and $\boldsymbol{X_{k+1}}$. For each $\boldsymbol{X_k}$, two pairs of orthogonal beams, i.e., $\boldsymbol{u}_{k \bmod 16}$ and
$\boldsymbol{u}_{(k+8) \bmod 16}$, and $\boldsymbol{u}_{(k+1) \bmod 16}$ and $\boldsymbol{u}_{(k+9) \bmod 16}$ , and two beams
$\boldsymbol{u}_{k \bmod 16}$ and $\boldsymbol{u}_{(k+1) \bmod 16}$ are almost parallel.
For $Q_1 = 32$
**Option** B1: In this option, the matrix $\boldsymbol{X_k}$ is selected as

$$\boldsymbol{X_k} = \{[\boldsymbol{u}_{2k \bmod 32} \ \boldsymbol{u}_{(2k+1) \bmod 32} \ \boldsymbol{u}_{(2k+2) \bmod 32} \ \boldsymbol{u}_{(2k+17) \bmod 32}]\}, k = 0,\ldots,15 \tag{19}$$

In this design, there is a single overleaping beam between $\boldsymbol{X_k}$ and $\boldsymbol{X_{k+1}}$. For each $\boldsymbol{X_k}$, a pair of orthogonal beams, i.e., $\boldsymbol{u}_{(2k+1) \bmod 32}$ and $\boldsymbol{u}_{(2k+17) \bmod 32}$, and three beams $\boldsymbol{u}_{2k \bmod 32}, \boldsymbol{u}_{(2k+1) \bmod 32}, \boldsymbol{u}_{(2k+2) \bmod 32}$ are almost parallel.
**Option** B2: In this option, the matrix $\boldsymbol{X_k}$ is selected as:

$$\boldsymbol{X_k} = \{[\boldsymbol{u}_{2k \bmod 32} \ \boldsymbol{u}_{(2k+1) \bmod 32} \ \boldsymbol{u}_{(2k+16) \bmod 32} \ \boldsymbol{u}_{(2k+17) \bmod 32}]\}, k = 0,\ldots,15$$

In this design, there is no overleaping beam between $\boldsymbol{X_k}$ and $\boldsymbol{X_{k+1}}$. For each $\boldsymbol{X_k}$, two pairs of orthogonal beams, i.e., $\boldsymbol{u}_{2k \bmod 32}$ and $\boldsymbol{u}_{(2k+16) \bmod 32}$, and $\boldsymbol{u}_{(2k+1) \bmod 32}$ and $\boldsymbol{u}_{(2k+17) \bmod 32}$, and two beams $\boldsymbol{u}_{2k \bmod 32}$, and $\boldsymbol{u}_{(2k+1) \bmod 32}$ are almost parallel.
**Option** B3: In this option, the matrix $\boldsymbol{X_k}$ is selected as:

$$X_k = \{[u_{k \bmod 32} \; u_{(k+8) \bmod 32} \; u_{(k+16) \bmod 32} \; u_{(k+24) \bmod 32}]\}, k = 0, \dots, 7$$
(20).

$$X_k = \{[v_{k \bmod 32} \; v_{(k+8) \bmod 32} \; v_{(k+16) \bmod 32} \; v_{(k+24) \bmod 32}]\}, k = 8, \dots, 15 \quad (21).$$

where

$$v_k = \begin{bmatrix} 1 \\ e^{\frac{j2\pi(k+\frac{1}{2})}{32}} \end{bmatrix} \qquad (22).$$

**Option** B4: In this option, the matrix $X_k$ is as:

$$X_k = \left\{ \begin{bmatrix} 1 & 1 & 1 & 1 \\ q_1^{k/2} & q_1^{\frac{k}{2}+8} & q_1^{\frac{k}{2}+16} & q_1^{\frac{k}{2}+24} \end{bmatrix} \right\}, k = 0, \dots, 15. \qquad (23).$$

**Option** B5: In this option, the matrix $X_k$ is as:

$$X_k = \left\{ \begin{bmatrix} 1 & 1 & 1 & 1 \\ q_1^k & q_1^{k+8} & q_1^{k+16} & q_1^{k+24} \end{bmatrix} \right\}, k = 0, \dots, 7 \qquad (24);$$

and

$$X_k = \left\{ \begin{bmatrix} 1 & 1 & 1 & 1 \\ q_1^{k+1/2} & q_1^{k+8+1/2} & q_1^{k+16+1/2} & q_1^{k+24+1/2} \end{bmatrix} \right\}, k = 8, \dots, 15. \quad (25).$$

**Option** B6: In this option, the matrix $X_k$ is:

$$X_k = \left\{ \begin{bmatrix} 1 & 1 & 1 & 1 \\ q_1^k & q_1^{k+8} & q_1^{k+16} & q_1^{k+24} \end{bmatrix} \right\}, k = 0, \dots, 15 \qquad (26).$$

which is the same as one given in Solution 2a below. For rank-2, the precoding matrix $W_2$ is given by:

$$W_2 \in \left\{ \frac{1}{2} \begin{bmatrix} Y_1 & Y_2 \\ \alpha(i)Y_1 & -\alpha(l)Y_2 \end{bmatrix}, \frac{1}{2} \begin{bmatrix} Y_1 & Y_2 \\ j\alpha(i)Y_1 & -j\alpha(l)Y_2 \end{bmatrix} \right\} \qquad (27).$$

where $\alpha(i) = q_1^{2(i-1)}$ with $q_1 := e^{j2\pi/32}$ for $(Y_1, Y_2) = (e_i, e_l)$.

In RAN1#73 meeting, it was agreed that one of the following codebook solutions, 2a and solution 2b, will be chosen:

Solution 2a:

$$W_1 = \begin{bmatrix} X_n & 0 \\ 0 & X_n \end{bmatrix} \text{ where } n = 0, 1, \dots, 15$$

$$\mathbf{X}_n = \begin{bmatrix} 1 & 1 & 1 & 1 \\ q_1^n & q_1^{n+8} & q_1^{n+16} & q_1^{n+24} \end{bmatrix} \text{ where } q_1 = e^{j2\pi/32}$$

For rank 1,
$$\mathbf{W}_{2,n} \in \left\{ \frac{1}{\sqrt{2}} \begin{bmatrix} \mathbf{Y} \\ \alpha(i)\mathbf{Y} \end{bmatrix}, \frac{1}{\sqrt{2}} \begin{bmatrix} \mathbf{Y} \\ j\alpha(i)\mathbf{Y} \end{bmatrix}, \frac{1}{\sqrt{2}} \begin{bmatrix} \mathbf{Y} \\ -\alpha(i)\mathbf{Y} \end{bmatrix}, \frac{1}{\sqrt{2}} \begin{bmatrix} \mathbf{Y} \\ -j\alpha(i)\mathbf{Y} \end{bmatrix} \right\}$$ and $\mathbf{Y} \in \{e_1, e_2, e_3, e_4\}$
and $\alpha(i) = q_1^{2(i-1)}$;

For   rank   2,
$$\mathbf{W}_{2,n} \in \left\{ \frac{1}{2} \begin{bmatrix} \mathbf{Y}_1 & \mathbf{Y}_2 \\ \mathbf{Y}_1 & -\mathbf{Y}_2 \end{bmatrix}, \frac{1}{2} \begin{bmatrix} \mathbf{Y}_1 & \mathbf{Y}_2 \\ j\mathbf{Y}_1 & -j\mathbf{Y}_2 \end{bmatrix} \right\}$$   and   $(\mathbf{Y}_1, \quad \mathbf{Y}_2) \quad = \quad (e_i, \quad e_k) \quad \in$
$\{(e_1,e_1),(e_2,e_2),(e_3,e_3),(e_4,e_4),(e_1,e_2),(e_2,e_3),(e_1,e_4),(e_2,e_4)\}$;

Solution 2b:

$$\mathbf{W}_1 = \begin{bmatrix} \mathbf{X}_n & 0 \\ 0 & \mathbf{X}_n \end{bmatrix} \text{ where } n = 0,1,..,15$$

$$\mathbf{X}_n = \begin{bmatrix} 1 & 1 & 1 & 1 \\ q_1^n & q_1^{n+8} & q_1^{n+16} & q_1^{n+24} \end{bmatrix} \text{ where } q_1 = e^{j2\pi/32}$$

For rank 1,
$$\mathbf{W}_{2,n} \in \left\{ \frac{1}{\sqrt{2}} \begin{bmatrix} \mathbf{Y} \\ \alpha(i)\mathbf{Y} \end{bmatrix}, \frac{1}{\sqrt{2}} \begin{bmatrix} \mathbf{Y} \\ j\alpha(i)\mathbf{Y} \end{bmatrix}, \frac{1}{\sqrt{2}} \begin{bmatrix} \mathbf{Y} \\ -\alpha(i)\mathbf{Y} \end{bmatrix}, \frac{1}{\sqrt{2}} \begin{bmatrix} \mathbf{Y} \\ -j\alpha(i)\mathbf{Y} \end{bmatrix} \right\}$$ and $\mathbf{Y} \in \{e_1, e_2, e_3, e_4\}$ and
$\alpha(i) = q_1^{2(i-1)}$;
For rank 2,

$$\mathbf{W}_{2,n} \in \left\{ \frac{1}{2} \begin{bmatrix} \mathbf{Y}_1 & \mathbf{Y}_2 \\ \mathbf{Y}_1 & \mathbf{Y}_2 \end{bmatrix}, \frac{1}{2} \begin{bmatrix} \mathbf{Y}_1 & \mathbf{Y}_2 \\ \mathbf{Y}_1 & -\mathbf{Y}_2 \end{bmatrix}, \frac{1}{2} \begin{bmatrix} \mathbf{Y}_1 & \mathbf{Y}_2 \\ -\mathbf{Y}_1 & \mathbf{Y}_2 \end{bmatrix}, \frac{1}{2} \begin{bmatrix} \mathbf{Y}_1 & \mathbf{Y}_2 \\ -\mathbf{Y}_1 & -\mathbf{Y}_2 \end{bmatrix} \right\} (\mathbf{Y}_1, \mathbf{Y}_2) \in \{(e_2, e_4)\}$$

and

$$\mathbf{W}_{2,n} \in \left\{ \frac{1}{2} \begin{bmatrix} \mathbf{Y}_1 & \mathbf{Y}_2 \\ \mathbf{Y}_1 & -\mathbf{Y}_2 \end{bmatrix}, \frac{1}{2} \begin{bmatrix} \mathbf{Y}_1 & \mathbf{Y}_2 \\ j\mathbf{Y}_1 & -j\mathbf{Y}_2 \end{bmatrix} \right\} (\mathbf{Y}_1, \mathbf{Y}_2) \in \{(e_1, e_1), (e_2, e_2), (e_3, e_3), (e_4, e_4)\}$$

and

$$\mathbf{W}_{2,n} \in \left\{ \frac{1}{2} \begin{bmatrix} \mathbf{Y}_1 & \mathbf{Y}_2 \\ \mathbf{Y}_2 & -\mathbf{Y}_1 \end{bmatrix}, \right\} (\mathbf{Y}_1, \mathbf{Y}_2) \in \{(e_1, e_3), (e_2, e_4), (e_3, e_1), (e_4, e_2)\}$$

In these codebook proposals, Solution 2a and Solution 2b, $X_n$ and $X_{n+8}$ contain the same set of beams, which results in a certain large number of duplicated rank-2 codewords. To solve this issue, Option B3-B5 are proposed by making all $X_n$ have distinct sets of beams (and hence all W's are distinct) for n=0,1, ..., 15. Option B6 is proposed by modifying rank-2 $W_2$. Using B3-B5 options, the new $W_1$ for rank-1 and rank-2 are distinct. Therefore, the overall codewords $W$ are all distinct. For option B6, the argument is given as follows. For Solution 2a and 2b, $X_{n+8} = X_n P_\pi$ where $P_\pi$ is a permutation matrix defined as:

$$\begin{bmatrix} 0 & 0 & 0 & 1 \\ 1 & 0 & 0 & 0 \\ 0 & 1 & 0 & 0 \\ 0 & 0 & 1 & 0 \end{bmatrix} \qquad (28).$$

For $n = 0,1, ...,15,$

$$W_2 \in \left\{ \frac{1}{2} \begin{bmatrix} Y_1 & Y_2 \\ \alpha(i)Y_1 & -\alpha(l)Y_2 \end{bmatrix}, \frac{1}{2} \begin{bmatrix} Y_1 & Y_2 \\ j\alpha(i)Y_1 & -j\alpha(l)Y_2 \end{bmatrix} \right\}. \qquad (29).$$

Alternatively, the overall codewords $W$ belong to:

$$W \in \left\{ \frac{1}{2} \begin{bmatrix} X_n Y_1 & X_n Y_2 \\ \alpha(i)X_n Y_1 & -\alpha(l)X_n Y_2 \end{bmatrix}, \frac{1}{2} \begin{bmatrix} X_n Y_1 & X_n Y_2 \\ j\alpha(i)X_n Y_1 & -j\alpha(l)X_n Y_2 \end{bmatrix} \right\}, for\ n = 0,1, ...,7$$

$$(30).$$

and

$$W \left\{ \frac{1}{2} \begin{bmatrix} X_n P_\pi Y_1 & X_n P_\pi Y_2 \\ \alpha(i)X_n P_\pi Y_1 & -\alpha(l)X_n P_\pi Y_2 \end{bmatrix}, \frac{1}{2} \begin{bmatrix} X_n P_\pi Y_1 & X_n P_\pi Y_2 \\ j\alpha(i)X_n P_\pi Y_1 & -j\alpha(l)X_n P_\pi Y_2 \end{bmatrix} \right\}, for\ n =$$

$$8,9, ...,15 \qquad (31).$$

For $n = 0,1,...,7$

$$(\alpha(i)Y_i, \alpha(l)Y_l) =$$
$$\left\{ \begin{matrix} (\alpha(1)e_1, \alpha(1)e_1), (\alpha(2)e_2, \alpha(2)e_2), (\alpha(3)e_3, \alpha(3)e_3), (\alpha(4)e_4, \alpha(4)e_4), \\ (\alpha(1)e_1, \alpha(2)e_2), (\alpha(2)e_2, \alpha(3)e_3), (\alpha(1)e_1, \alpha(4)e_4), (\alpha(2)e_2, \alpha(4)e_4) \end{matrix} \right\} \qquad (32).$$

while for $n = 8,9, ...,15$

$$(\alpha(i)P_\pi Y_i, \alpha(l)P_\pi Y_l) =$$
$$\left\{ \begin{matrix} (\alpha(1)e_2, \alpha(1)e_2), (\alpha(2)e_3, \alpha(2)e_3), (\alpha(3)e_4, \alpha(3)e_4), (\alpha(4)e_1, \alpha(4)e_1), \\ (\alpha(1)e_2, \alpha(2)e_3), (\alpha(2)e_3, \alpha(3)e_4)(\alpha(1)e_2, \alpha(4)e_1), (\alpha(2)e_3, \alpha(4)e_1) \end{matrix} \right\}. \qquad (33).$$

As a result, $(\alpha(i)Y_i, \alpha(l)Y_l) \neq (\alpha(i)P_\pi Y_i, \alpha(l)P_\pi Y_l)$. Therefore, there are no duplicated codewords for rank 2.

Designs for 4 bit $W_1$ with $N_b = 2$

For $Q_1 = 16,$

**Option** C1: In this option, the matrix $X_k$ is selected as:

$$X_k = \left\{ \begin{bmatrix} u_{k\ \mathrm{mod}\ 16} & u_{(k+1)\ \mathrm{mod}\ 16} \end{bmatrix} \right\}, k = 0, ...,15. \qquad (34).$$

In this design, there is a single overleaping beams between $X_k$ and $X_{k+1}$. For each $X_k$, two beams $u_{k\ \mathrm{mod}\ 16}$ and $u_{(k+1)\ \mathrm{mod}\ 16}$ are almost parallel.

**Option** C2: In this option, the matrix $X_k$ is selected as:

$$X_k = \left\{ \begin{bmatrix} u_{k\ \mathrm{mod}\ 16} & u_{(k+8)\ \mathrm{mod}\ 16} \end{bmatrix} \right\}, k = 0, ...,15. \qquad (35).$$

In this design, no overleaping beam between $X_k$ and $X_{k+1}$ occurs. For each $X_k$, there is one pair of orthogonal beams, i.e., $u_{k \bmod 16}$ and $u_{(k+8) \bmod 16}$.

Designs for 4 bit $W_2$

For rank 1 and rank 2, the precoding matrix $W_2$ is given by:

$$W_2 = [a_1 \cdots a_R] \qquad (36).$$

where $a_r$ is defined as:

$$a_r = \begin{bmatrix} q_2^m \\ q_2^n \end{bmatrix} \text{ and } q_2 = e^{j2\pi/Q_2}. \qquad (37)$$

Option a:

**Rank** 1: In this option, the precoding matrix $W_2$ is chosen to be 8-Tx $W_2$ (the same as 8-Tx codebook)

$$W_2 \in \left\{ \frac{1}{\sqrt{2}} \begin{bmatrix} Y \\ Y \end{bmatrix}, \frac{1}{\sqrt{2}} \begin{bmatrix} Y \\ jY \end{bmatrix}, \frac{1}{\sqrt{2}} \begin{bmatrix} Y \\ -Y \end{bmatrix}, \frac{1}{\sqrt{2}} \begin{bmatrix} Y \\ jY \end{bmatrix} \right\} \qquad (38).$$

where $Y$ belongs to $Y \in \{\widetilde{e_1}, \widetilde{e_2}, \widetilde{e_3}, \widetilde{e_4}\}$ with $\widetilde{e_\iota}$ denoting the $i$th column of the identity matrix. In this option, the same beam is selected for two different polarizations.

Rank 2: In this option, the precoding matrix is the same as 8-Tx $W_2$

$$W_2 \in \left\{ \frac{1}{2} \begin{bmatrix} Y_1 & Y_2 \\ Y_1 & -Y_2 \end{bmatrix}, \frac{1}{2} \begin{bmatrix} Y_1 & Y_2 \\ jY_1 & -jY_2 \end{bmatrix} \right\} \qquad (39).$$

Option b:

**Rank** 1: In this option, the precoding matrix $W_2$ is chosen to be:

$$W_2 \in \left\{ \frac{1}{\sqrt{2}} \begin{bmatrix} Y_1 \\ Y_2 \end{bmatrix}, \frac{1}{\sqrt{2}} \begin{bmatrix} Y_1 \\ jY_2 \end{bmatrix}, \frac{1}{\sqrt{2}} \begin{bmatrix} Y_1 \\ -Y_2 \end{bmatrix}, \frac{1}{\sqrt{2}} \begin{bmatrix} Y_1 \\ jY_2 \end{bmatrix} \right\} \qquad (40).$$

where $Y_1$, and $Y_2$ belong to $\{\widetilde{e_1}, \widetilde{e_2}, \widetilde{e_3}, \widetilde{e_4}\}$ with $\widetilde{e_\iota}$ denoting the $i$th column of the identity matrix. In this option, the different beams can be selected for two different polarizations.

**Rank** 2: In this option, the precoding matrix is the same as 8-Tx $W_2$

$$W_2 \in \left\{ \frac{1}{2} \begin{bmatrix} Y_1 & Y_2 \\ Y_1 & -Y_2 \end{bmatrix}, \frac{1}{2} \begin{bmatrix} Y_1 & Y_2 \\ jY_1 & -jY_2 \end{bmatrix} \right\} \qquad (41).$$

For $W_1$ given in options A1 and B1, one choice of the pair $(Y_1, Y_2)$ is given as follows:

$$(Y_1, Y_2) \in \{(\widetilde{e_1}, \widetilde{e_1}), (\widetilde{e_2}, \widetilde{e_2}), (\widetilde{e_3}, \widetilde{e_3}), (\widetilde{e_2}, \widetilde{e_4})\} \qquad (42).$$

This choice enables the selection of two orthogonal beams (for options A1 and B1, beam 2 and beam 4 are orthogonal) for two different polarizations.

For $W_1$ given in options A2 and B2, one choice of the pair ($Y_1$, $Y_2$) is given as follows:

$$(Y_1, Y_2) \in \{(\widetilde{e_1}, \widetilde{e_1}), (\widetilde{e_2}, \widetilde{e_2}), (\widetilde{e_1}, \widetilde{e_3}), (\widetilde{e_2}, \widetilde{e_4})\} \qquad (43).$$

This choice enables the selection of orthogonal beams (for options A2 and B2, beam 1 and beam 3 are orthogonal and beam 2 and beam 4 are orthogonal) for two different polarizations.

Option c:

Rank 1: In Option c, the precoding matrix $W_2$ is chosen to be:

$$W_2 \in \left\{ \frac{1}{\sqrt{2}} \begin{bmatrix} Y_1 \\ q_2^m Y_2 \end{bmatrix} \right\} \qquad (44).$$

where $Y_1$ and $Y_2$ belong to $\{\widetilde{e_1}, \widetilde{e_2}, \widetilde{e_3}, \widetilde{e_4}\}$ with $\widetilde{e_i} (i = 1,2,3,4)$ denoting the $i$th column of the identity matrix. In this option, the different beams can be selected for two different polarizations.

One choice of $Q_2$ is $Q_2 = 4$ and $m = 0,1,2,3$. Hence, $q_2^m \in \{1, j, -1, -j\}$. Generally, $Q_2 = 2^N$ and $m \in$ a subset of $\{0,1, ..., Q_2 - 1\}$.

Rank 2: In Option c, the precoding matrix is the same as 8-Tx $W_2$

$$W_2 \in \left\{ \frac{1}{2} \begin{bmatrix} Y_1 & Y_2 \\ q_2^n Y_1 & -q_2^n Y_2 \end{bmatrix}, \frac{1}{2} \begin{bmatrix} Y_1 & Y_1 \\ q_2^n Y_2 & -q_2^n Y_2 \end{bmatrix}, \frac{1}{2} \begin{bmatrix} Y_1 & Y_2 \\ q_2^n Y_2 & -q_1^{k-l} q_2^n Y_1 \end{bmatrix} \right\} \qquad (45).$$

where $Y_1$ and $Y_2$ belong to $\{\widetilde{e_l}, \widetilde{e_k}\}$ and $k, l \in \{1,2,3,4\}$.

For $W_1$ given in options A1 and B1, one choice of the pair ($Y_1$, $Y_2$) is given as follows:

$$(Y_1, Y_2) \in \{(\widetilde{e_1}, \widetilde{e_1}), (\widetilde{e_2}, \widetilde{e_2}), (\widetilde{e_3}, \widetilde{e_3}), (\widetilde{e_2}, \widetilde{e_4})\} \qquad (46).$$

This choice enables the selection of two orthogonal beams (for options A1 and B1, beam 2 and beam 4 are orthogonal) for two different polarizations.

For $W_1$ given in options A2 and B2, one choice of the pair ($Y_1$, $Y_2$) is given as follows:

$$(Y_1, Y_2) \in \{(\widetilde{e_1}, \widetilde{e_1}), (\widetilde{e_2}, \widetilde{e_2}), (\widetilde{e_1}, \widetilde{e_3}), (\widetilde{e_2}, \widetilde{e_4})\} \qquad (47).$$

This choice enables the selection of orthogonal beams (for options A2 and B2, beam 1 and beam 3 are orthogonal and beam 2 and beam 4 are orthogonal) for two different polarizations.

The Kronecker product based FD-MIMO codebook has a double codebook structure, i.e., $W = W_1 W_2$, where a codeword $w_1$ in the $W_1$ codebook can be expressed as $w_1 = w_V \otimes w_H$, where $w_V$ is a $W_1$ codeword in the vertical domain called V-codebook and $w_H$ is a $W_1$ codeword in the elevation domain called H-codebook. A codebook $W$ for FD-MIMO with $8H \times 8V$ XP (64 antenna elements) antenna configuration is given as follows:

$$W_V = \left\{ \begin{bmatrix} X_V(k) & 0 \\ 0 & X_V(k) \end{bmatrix}, k = 0, ..., 15 \right\} \text{ and } W_H = \left\{ \begin{bmatrix} X_H(k) & 0 \\ 0 & X_H(k) \end{bmatrix}, k = 0, ..., 15, \right. \qquad (48).$$

where $X_V(k)$ and $X_H(k)$ are $4 \times 4$ matrices given by

$$X_V(k) = \begin{bmatrix} \boldsymbol{b}_{f_{V,1}(k)} & \boldsymbol{b}_{f_{V,2}(k)} & \boldsymbol{b}_{f_{V,3}(k)} & \boldsymbol{b}_{f_{V,4}(k)} \end{bmatrix} \qquad (49).$$

$$X_H(k) = \begin{bmatrix} \boldsymbol{b}_{f_{H,1}(k)} & \boldsymbol{b}_{f_{H,2}(k)} & \boldsymbol{b}_{f_{H,3}(k)} & \boldsymbol{b}_{f_{H,4}(k)} \end{bmatrix} \qquad (50).$$

with $\boldsymbol{b}_n = \begin{bmatrix} 1 & e^{\frac{j2\pi n}{32}} & e^{\frac{j2\pi 2n}{32}} & e^{\frac{j2\pi 3n}{32}} \end{bmatrix}^T$, $n = 0,1,...,31$; and $f_{V,t}(k) \in \{0,1,...,31\}$ and $f_{H,t}(k) \in \{0,1,...,31\}$, $k = 1,2,3,4$.

The Release 10 8-Tx codebook is used for the horizontal and vertical domains. The overall FD-MIMO $W_1$ codebook is given is constructed as:

$$W_1 = \left\{ \begin{bmatrix} X(i,j) & 0 \\ 0 & X(i,j) \end{bmatrix}, 0 \le i \le 15, 0 \le j \le 15 \right\} \qquad (51).$$

with $\boldsymbol{b}_n = \begin{bmatrix} 1 & e^{\frac{j2\pi n}{32}} & e^{\frac{j2\pi 2n}{32}} & e^{\frac{j2\pi 3n}{32}} \end{bmatrix}^T$, $n = 0,1,...,31$; and $f_{V,t}(k) \in \{0,1,...,31\}$ and $f_{H,t}(k) \in \{0,1,...,31\}$, $k = 1,2,3,4$.

The Release 10 8-Tx codebook is used for the horizontal and vertical domains. The overall FD-MIMO $W_1$ codebook is given is constructed as:

$$W_1 = \left\{ \begin{bmatrix} X(i,j) & 0 \\ 0 & X(i,j) \end{bmatrix}, 0 \le i \le 15, 0 \le j \le 15 \right\} \qquad (52).$$

For example: An evenly oversampled DFT codebook for $8V \times 8H$ with 4-bit H-codebook and 4-bit V-codebook with $d_H = d_V = 0.5\lambda_c$. $X_V(k)$ and $X_H(k)$ are $4 \times 4$ matrices given by:

$$X_V(k) = X_H(k) = \begin{bmatrix} b_{2k\bmod 32} & b_{(2k+1)\bmod 32} & b_{(2k+2)\bmod 32} & b_{(2k+3)\bmod 32} \end{bmatrix}$$

with

$$\boldsymbol{b}_n = \begin{bmatrix} 1 & e^{\frac{j2\pi n}{32}} & e^{\frac{j2\pi 2n}{32}} & e^{\frac{j2\pi 3n}{32}} \end{bmatrix}^T, \quad n = 0,1,...,31. \qquad (53).$$

For example: A non-evenly oversampled DFT codebook for $8V \times 8H$ with 4-bit H-codebook and 4-bit V-codebook with $d_H = d_V = 0.5\lambda_c$.

The idea of using non-evenly oversampled DFT vector can be applied to design the H-codebook and V-codebook. As stated earlier, in the azimuth domain, UEs are located in a sector of 120°. In the elevation domain, most UEs are distributed in an interval of $\left[\frac{\pi}{3}, \frac{7\pi}{12}\right]$.

A matrix $X_H(k)$ is defined as:

$$X_H(k) = \begin{bmatrix} b_{2k\bmod 32,H} & b_{(2k+1)\bmod 32,H} & b_{(2k+2)\bmod 32,H} & b_{(2k+3)\bmod 32,H} \end{bmatrix} \qquad (54).$$

for $k = 0,...,15$, where $b_{n,H}$ is defined as:

$$b_{n,H} = \begin{bmatrix} 1 & e^{\frac{j2\pi f(n)}{64}} & e^{\frac{j2\pi 2f(n)}{64}} & e^{\frac{j2\pi 3f(n)}{64}} \end{bmatrix}^T$$

for $f(n) = 0,1,2,3,4,5,6,7,8,9,54,55,56,57,58,59,60,61,62,63$,

respectively for $n$ = 0,1,2,3,4,5,6,7,8,9,22,23,24,25,26,27,28,29,30,31.

## Table 1 The n-index versus f(n)-index

| $n$ | 0 | 1 | 2 | 3 | 4 | 5 | 6 | 7 | 8 | 9 | 22 | 23 | 24 | 25 | 26 | 27 | 28 | 29 | 30 | 31 |
|---|---|---|---|---|---|---|---|---|---|---|---|---|---|---|---|---|---|---|---|---|
| $f(n)$ | 0 | 1 | 2 | 3 | 4 | 5 | 6 | 7 | 8 | 9 | 54 | 55 | 56 | 57 | 58 | 59 | 60 | 61 | 62 | 63 |

where 20 closely spaced beams constructed with 20 different values of $n$ correspond to azimuth steering angles around 90 degrees;

$$b_{n,H} = \left[1 \quad e^{\frac{j9\pi}{32}+\frac{j15\pi}{128}(n-9)} \quad e^{\frac{j18\pi}{32}+\frac{j15\pi2(n-9)}{128}} \quad e^{\frac{j27\pi}{32}+\frac{j15\pi3(n-9)}{128}}\right]^T$$

for
$n$ = 10,11,12,13,14,15,16,17,18,19,20,21.
where 12 widely spaced beams constructed with 12 different values of $n$ correspond to azimuth steering angles around 0 degrees.

The matrix $X_V(k)$ is defined as:

$$X_V(k) = \left[b_{2k \bmod 32,V} \quad b_{(2k+1)\bmod 32,V} \quad b_{(2k+16)\bmod 32,V} \quad b_{(2k+17)\bmod 32,V}\right]$$

for $k$ = 0,...,15.

This construction of $X_V(k)$ helps provide robust performance for widely spaced and narrowly spaced antenna configuration, as it contains two pairs of closely spaced beams and two pairs of orthogonal beams. Widely spaced vertical antenna array can help to separate beams in elevation domain even with small number of antenna elements in the vertical antenna array, as it can provide sufficient aperture.

$$b_{n,V} = \left[1 \quad e^{\frac{j2\pi n}{32}} \quad e^{\frac{j2\pi 2n}{32}} \quad e^{\frac{j2\pi 3n}{32}}\right]^T \text{ for } n \in \{0,1,\dots,31\} \tag{55}.$$

Certain embodiments show that an appropriate choice of a co-phasing factor in the W2 codebook can reduce or eliminate redundant codewords in the overall codebook. The Release 10 8-Tx $W_1$ codebook consists of 16 codewords, each containing 4 adjacent beams. There are two 2 overlapping beams between two adjacent codewords. For rank 1, there are four beam selection vectors and four co-phasing factors (i.e., 1,-1, $j$,-$j$), which are constant independent of beam selection vectors. Due to the use of the overlapping beams and beam selection independent co-phasing factors, the final codebook $W$ in Release 10 8-Tx codebook contains a number of the redundant codewords for rank 1. In a FD-MIMO codebook example shown in the present disclosure, each $W_1$ codeword contains four overlapping beams with three other $W_1$ codewords. To be more specific, since each pair of $X(i)$ and $X(i + 1)$, and $X(j)$ and $X(j + 1)$ contains two overlapping beams, the FD-MIMO codewords $X(i,j)$, $X(i + 1,j)$, $X(i, j + 1)$, and $X(i + 1, j + 1)$ have four overlapping beams, which creates a large number of the redundant codewords. This embodiment presents two methods for reducing or eliminating the redundant codewords in the final codebook.

**Method 1)** reduce the number of the redundant beams in $X_V(i)$ and/or $X_H(j)$ For rank 1-2, the $W_1$ FD-MIMO codebook for $\alpha V \times \beta H$ for some positive even integers $\alpha$ and $\beta$ can be constructed as

$$W_1 := \left\{W_1(i,j) = \begin{bmatrix} X(i,j) & 0 \\ 0 & X(i,j) \end{bmatrix}, i = 0,1,\dots,S_v - 1, j = 0,1,\dots,S_h - 1\right\} \tag{56}$$

where $X(i,j) = X_V(i) * X_H(j)$ with $X_V(i)$ and $X_H(j)$ denoting the vertical and horizontal codebooks respectively. For example, the matrix $X_V(i)$ can be selected as follows:

$$X_V = \left\{ X_V(i) = \left[ \boldsymbol{v}_{(M_{1v}i) \bmod Q_v} \ \boldsymbol{v}_{(M_{1v}i+1) \bmod Q_v} \cdots \boldsymbol{v}_{(M_{1v}i+M_{2v}) \bmod Q_v} \right] \right\} \quad (57).$$

where $M_{1v}$, $M_{2v}$ and $Q_V$ are positive integers, and $\boldsymbol{v}_n$ is an oversampled DFT vector given by

$$\boldsymbol{v}_n = \left[ 1 \ e^{\frac{j2\pi n}{Q_v}} \cdots e^{\frac{j2\pi n \left( \frac{\alpha}{2}-1 \right)}{Q_v}} \right] \quad (59).$$

Similarly, the matrix $X_H(j)$ can be selected as follows:

$$X_H = \left\{ X_H(j) = \left[ \boldsymbol{h}_{(M_{1h}j) \bmod Q_h} \ \boldsymbol{h}_{(M_{1h}j+1) \bmod Q_h} \cdots \boldsymbol{h}_{(M_{1h}j+M_{2h}) \bmod Q_h} \right] \right\}$$

where $M_{1h}$, $M_{2h}$ and $Q_h$ are positive integers, and $\boldsymbol{h}_n$ is an oversampled DFT vector given by:

$$\boldsymbol{h}_n = \left[ 1 \ e^{\frac{j2\pi n}{Q_h}} \cdots e^{\frac{j2\pi n \left( \frac{\beta}{2}-1 \right)}{Q_h}} \right] \quad (60).$$

Note that the number of the overlapping beams between $X_V(i)$ and $X_V(i + 1)$ is given by $M_{2v} - M_{1v} + 1$, and the number of the overlapping beams between $X_H(j)$ and $X_H(j + 1)$ is given by $M_{2h} - M_{1h} + 1$. For instance, Release 10 8-Tx codebook has $M_{2h} = 3$ and $M_{1h} = 2$, and thus there are two overlapping beams between $X_H(j)$ and $X_H(j + 1)$. Since the beams are normally designed to cover the entire angular space $[0, 2\pi]$, the parameters $M_{1v}$, $M_{2v}$ and $Q_V$ or $M_{1h}$, $M_{2h}$ and $Q_h$, and the codebook size should be jointly designed. For $Q_h = Q_v = 32$, the choice of $M_{2h} = M_{2v} = 3$ and $M_{1h} = M_{1v} = 2$ leads to 4-bit $X_V$ an $X_H$ with two overlapping beams while the choice of $M_{2h} = M_{2v} = 3$ and $M_{1h} = M_{1v} = 1$ leads to 5-bit $X_V$ an $X_H$ with three overlapping beams.

**Method 2)** Use co-phasing factor depending on the beam selection indices in $W_2$

In certain embodiments, the $W_2$ codebook is designed as follows:

$$W_2 = \left\{ \frac{1}{\sqrt{2}} \begin{bmatrix} Y \\ \alpha(k)Y \end{bmatrix} \right\}, \quad (61).$$

where $\alpha(k) = \exp\left( \frac{j2\pi k}{K} \right)$, $k = 0,...,K - 1$, and $Y \in \{\boldsymbol{e}_1, \boldsymbol{e}_2,...,\boldsymbol{e}_M\}$ with $\boldsymbol{e}_j$ being defined as $\alpha$ 16 $\times$ 1 beam selection vector with zero entries except for the $i$th entry. Clearly, the design of the $W_2$ codebook follows the same principle of the Release 10 8-Tx $W_2$ codebook design. Note that in this proposed FD-MIMO design, the choice of $\alpha(k)$ is independent of the beam selection index.

Designing the co-phasing factors in $W_2$ is another approach to reduce or eliminate the redundant code-words. One approach is to construct the $W_2$ codebook as follows:

$$W_2 = \left\{ \frac{1}{\sqrt{2}} \begin{bmatrix} Y \\ \alpha(i)Y \end{bmatrix}, \ \frac{1}{\sqrt{2}} \begin{bmatrix} Y \\ j\alpha(i)Y \end{bmatrix}, \ \frac{1}{\sqrt{2}} \begin{bmatrix} Y \\ -\alpha(i)Y \end{bmatrix}, \ \frac{1}{\sqrt{2}} \begin{bmatrix} Y \\ -j\alpha(i)Y \end{bmatrix} \right\} \quad (62).$$

where $\alpha(i)$ depends on the beam selection index $i$. In the 4-Tx enhanced codebook, a similar approach was used for designing the rank-1 $W_2$ codebook. Specifically, the choice of $\alpha(i)$ in the 4-Tx enhanced codebook is given by:

$$\alpha(i) = e^{j(i-1)\pi/8}. \quad (63).$$

It means that a beam selection index is determined as a function of a co-phasing factor. In particular, in the 4-Tx enhanced codebook case, the co-phasing factors are listed in the following table:

Table 2 Co-phasing factors versus beam selection index $i$ for the 4-Tx enhanced codebook

| beam index $i$ | 1 | 2 | 3 | 4 |
|---|---|---|---|---|
| Co-phasing factors | $\{1, -1, j, -j\}$ | $\{e^{\frac{j\pi}{8}}, -e^{\frac{j\pi}{8}}, e^{\frac{j5\pi}{8}}, -e^{\frac{j5\pi}{8}}\}$ | $\{e^{\frac{j\pi}{4}}, -e^{\frac{j\pi}{4}}, e^{\frac{j3\pi}{4}}, -e^{\frac{j3\pi}{4}}\}$ | $\{e^{\frac{j3\pi}{8}}, -e^{\frac{j3\pi}{8}}, e^{\frac{j7\pi}{8}}, -e^{\frac{j7\pi}{8}}\}$ |

Referring to Table , the beam index in each code-word of the $W_1$ codebook determines the set of the co-phasing factors. The set of the co-phasing factors $\{1, -1, j, -j\}$ is the most commonly used co-phasing factors and has been proved to have a better codebook performance than other sets of co-phasing factors in practice. In the 4-Tx enhanced codebook, the choice of the co-phasing factors depends on the beam index. Depending upon the $W_1$ codebook design, this approach cannot guarantee that every beam in the $W_1$ codebook will use the set of the co-phasing factors $\{1, -1, j, -j\}$ since certain beams may not appear in every column index in the $W_1$ codebook. For example, in Release 10 8-Tx codebook design, the beam $b_3 = \left[1 \ e^{\frac{j2\pi 3}{32}} \ e^{\frac{j2\pi 2 \cdot 3}{32}} \ e^{\frac{j2\pi 3 \cdot 3}{32}}\right]^T$ only appears in column 4 of $X(0)$ and appears in column 4 of $X(1)$. The set of the co-phasing factors $\{1, -1, j, -j\}$ is not used to apply the beam $b_3$ if the construction approach for $W_2$ in the 4-Tx enhanced codebook is used. The following example shows a different method to construct $W_2$:

$$W_2\left(\left[l_{1,n} \ l_{2,n} \ l_{3,n} \ l_{4,n}\right]\right) =$$
$$\left\{\frac{1}{\sqrt{2}}\begin{bmatrix} e_i \\ \beta(l_{i,n})e_i \end{bmatrix}, \frac{1}{\sqrt{2}}\begin{bmatrix} e_i \\ j\beta(l_{i,n})e_i \end{bmatrix}, \frac{1}{\sqrt{2}}\begin{bmatrix} e_i \\ -\beta(l_{i,n})e_i \end{bmatrix}, \frac{1}{\sqrt{2}}\begin{bmatrix} e_i \\ -j\beta(l_{i,n})e_i \end{bmatrix}, i = 1,2,3,4\right\}$$
$$(64).$$

where $\beta(l_{i,n}) := e^{j2\pi l_{i,n}/8}$, and the value of $l_{i,n}$ is the number of times of the appearance of the $i$th beam in codeword $W_1(k)$ for $k = 0,1,2...,n - 1$. Table lists a W2 codebook design example. For example, in the first row of Table 2 ($n = 0$), all four beams $b_0 \ b_1 \ b_2 \ b_3$ have the set of co-phasing factors $\{1, -1, j, -j\}$ corresponding to $l_{1,n} = l_{2,n} = l_{3,n} = l_{4,n} = 0$. In the second row of Table 2 ($n = 1$), the first and second beams $b_2$, $b_3$ have appeared in $W_1(0)$ once and thus have the set of the co-phasing factors $\left\{e^{\frac{j\pi}{4}}, -e^{\frac{j\pi}{4}}, je^{\frac{j\pi}{4}}, -je^{\frac{j\pi}{4}}\right\}$ corresponding to $l_{1,n} = l_{2,n} = 1$, and the third and fourth beams $b_4$, $b_5$ have not appeared in $W_1(0)$ and thus have the set of the co-phasing factors $\{1, -1, j, -j\}$ corresponding to $l_{3,n} = l_{4,n} = 0$.

Table 3 The $W_2$ Codebook Example

| $n$ | Beams in $W_1(n)$ | $W_2([l_{1,n} \ l_{2,n} \ l_{3,n} \ l_{4,n}])$ |
|---|---|---|
| 0 | $[b_0 \ b_1 \ b_2 \ b_3]$ | $W_2([0 \ 0 \ 0 \ 0])$ |
| 1 | $[b_2 \ b_3 \ b_4 \ b_5]$ | $W_2([1 \ 1 \ 0 \ 0])$ |
| 2 | $[b_4, \ b_5 \ b_6 \ b_7]$ | $W_2([1 \ 1 \ 0 \ 0])$ |
| 3 | $[b_6, \ b_7 \ b_8 \ b_9]$ | $W_2([1 \ 1 \ 0 \ 0])$ |
| 4 | $[b_8 \ b_9 \ b_{10} \ b_{11}]$ | $W_2([1 \ 1 \ 0 \ 0])$ |
| 5 | $[b_{10} \ b_{11} \ b_{12} \ b_{13}]$ | $W_2([1 \ 1 \ 0 \ 0])$ |
| 6 | $[b_{12} \ b_{13} \ b_{14} \ b_{15}]$ | $W_2([1 \ 1 \ 0 \ 0])$ |
| 7 | $[b_{14} \ b_{15} \ b_{16} \ b_{17}]$ | $W_2([1 \ 1 \ 0 \ 0])$ |
| 8 | $[b_{16} \ b_{17} \ b_{18} \ b_{19}]$ | $W_2([1 \ 1 \ 0 \ 0])$ |
| 9 | $[b_{18} \ b_{19} \ b_{20} \ b_{21}]$ | $W_2([1 \ 1 \ 0 \ 0])$ |
| 10 | $[b_{20} \ b_{21} \ b_{22} \ b_{23}]$ | $W_2([1 \ 1 \ 0 \ 0])$ |

(continued)

| $n$ | Beams in $W_1(n)$ | $W_2([l_{1,n}\ l_{2,n}\ l_{3,n}\ l_{4,n}])$ |
|---|---|---|
| 11 | $[b_{22}\ b_{23}\ b_{24}\ b_{25}]$ | $W_2([1\ 1\ 0\ 0])$ |
| 12 | $[b_{24}\ b_{25}\ b_{26}\ b_{27}]$ | $W_2([1\ 1\ 0\ 0])$ |
| 13 | $[b_{26}\ b_{27}\ b_{28}\ b_{29}]$ | $W_2([1\ 1\ 0\ 0])$ |
| 14 | $[b_{28}\ b_{29}\ b_{30}\ b_{31}]$ | $W_2([1\ 1\ 0\ 0])$ |
| 15 | $[b_{30}\ b_{31}\ b_0\ b_1]$ | $W_2([1\ 1\ 1\ 1])$ |

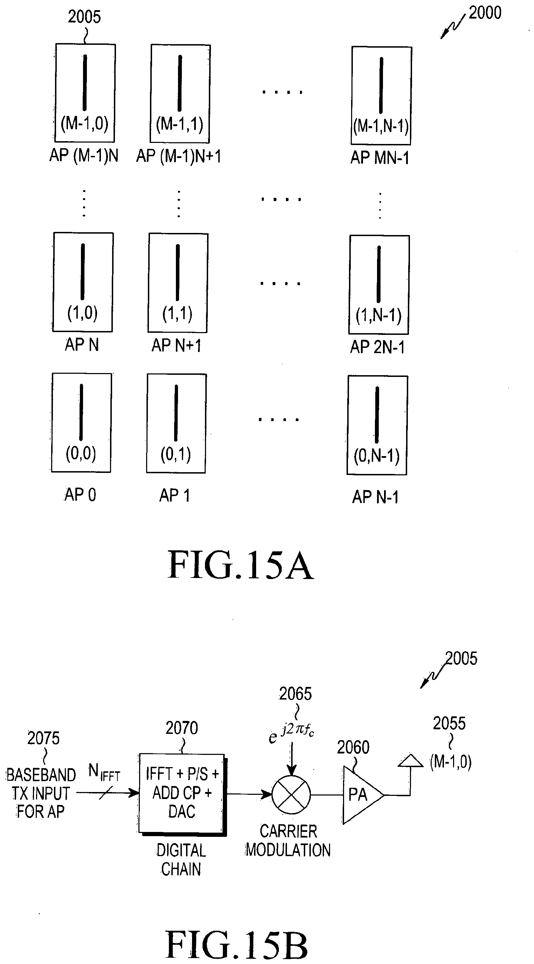

FIGURE 15A illustrates an example of 2D co-polarized antenna array 2000 according to embodiments of the present disclosure. The embodiment of the 2D co-polarized antenna array 2000 shown in FIGURE 15A is for illustration only. Other embodiments could be used without departing from the scope of the present disclosure. FIGURE 15A illustrates an example of 2D co-polarized antenna array 2000, where $MN$ virtual antenna ports, i.e., antenna ports (APs) 0 to ($MN$-1) are placed on $MxN$ 2D grid.

The 2D co-polarized antenna array 2000 includes a plurality of antenna ports 2005. Each antenna port 2005 is mapped to a number of physical antennas. In one implementation of 2D co-polarized antenna array 2000, each antenna port 2005 is mapped to a single antenna as depicted in FIGURE 15B in which antenna port 2005 is mapped to antenna 2055. Antenna 2055 is preceded by a power amplifier block 2060, which is placed right after a carrier modulation block 2065. Baseband transmit antenna input 2075 of size $N_{IFFT}$ goes through an OFDM digital chain 2070, comprising IFFT, P/S, add CP and DAC. The baseband transmit input signals for the $MN$ antenna ports can be constructed by pre-multiplying a ($MN \times J$) digital precoding matrix to $J$ input signals, where $J \leq MN$, as illustrated in FIGURE 9.

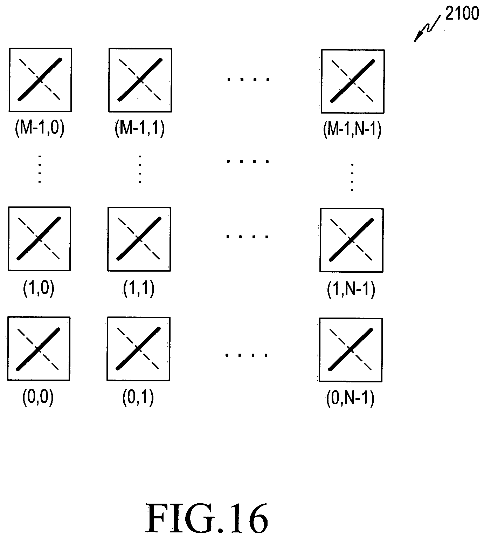

FIGURE 16 illustrates an example of 2D cross-polarized antenna array 2100 according to embodiments of the present disclosure. The embodiment of the 2D cross-polarized antenna array 2100 shown in FIGURE 16 is for illustration only. Other embodiments could be used without departing from the scope of the present disclosure.

In the example shown in FIGURE 16 the 2D cross-polarized antenna array 2100 includes $2MN$ antenna ports, i.e., antenna ports (APs) 0 to ($2MN$-1) are placed on $MxN$ 2D grid, where each point in the 2D grid has two antenna ports, one with +45° polarization and the other with -45° polarization. In this particular implementation of 2D co-polarized antenna array, each antenna port comprises a single antenna. The baseband Tx input signals for the $2MN$ antenna ports can be constructed by pre-multiplying a ($2MNxJ$) digital precoding matrix to $J$ input signals, where $J \leq 2MN$.

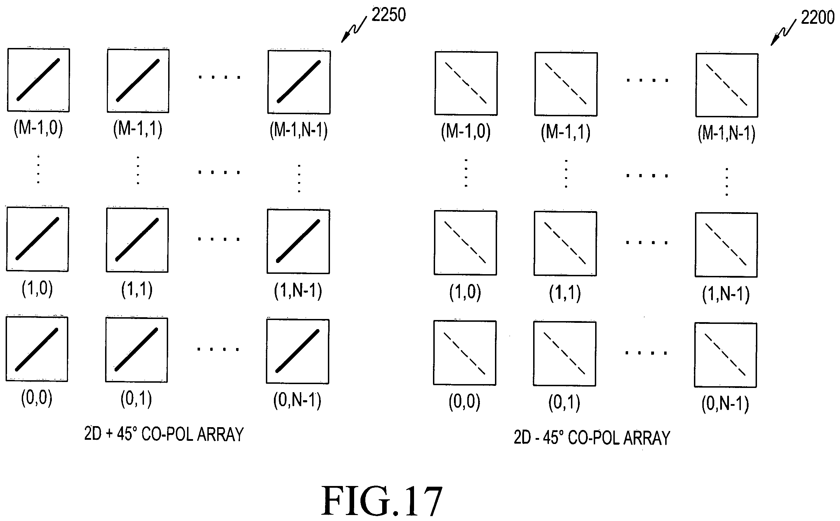

FIGURE 15A illustrates 2D co-pol arrays 2200 and 2250 according to embodiments of the present disclosure. The embodiments of the 2D co-pol array 2200, 2250 shown in FIGURE 17 are for illustration only. Other embodiments could be used without departing from the scope of the present disclosure.

The two 2D co-pol arrays 2200 and 2250 include the 2D cross-polarized array shown in FIGURE 16. The 2D co-polarized array 2250 includes the set of $MN$ number of +45° polarized elements and the 2D co-polarized array 2200 includes the set of $MN$ number of -45° polarized elements.

Definition (a unit norm complex number and DFT vector):

A complex number that can be mapped to a point at $\dfrac{2\pi}{L}$ radian phase angle on a unit circle is defined as

$$q_L := e^{-j\frac{2\pi}{L}}.$$

An $\ell$-th DFT vector, $b_{L,A}(\ell)$ of length $A$, sampling $[0,2\pi]$ with $L$ levels are defined as in the following:

$$b_{L,A}(\ell) := \left[1\ q_L^\ell, \dots, q_L^{\ell(A-1)}\right]^T : \ell = 0,1,\dots,L-1 \qquad (65).$$

Time and frequency domain baseband channel models:

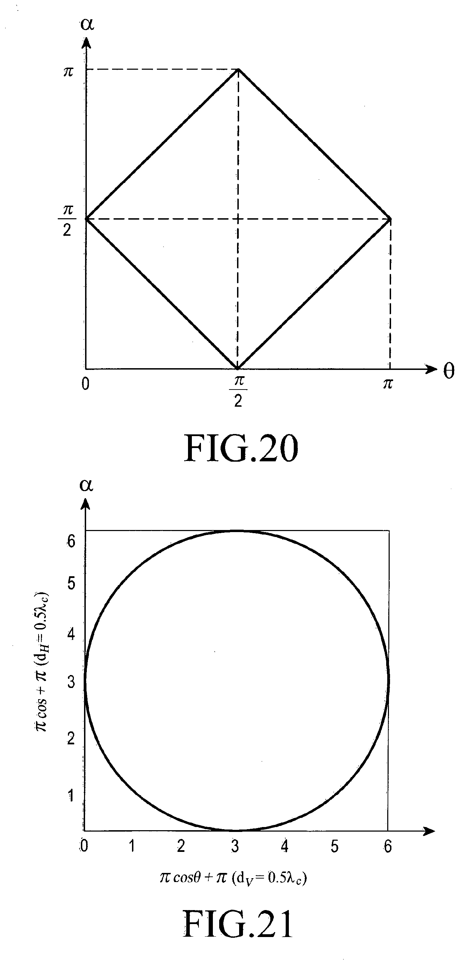

For a 2D co-polarized uniform rectangular array (as illustrated in FIGURES 20A and 20B and FIGURE 17), a time-domain baseband equivalent channel vector $h(\tau)$ (a $MN \times 1$ vector) observed at a receive antenna at UE 116 is given by:

$$h(\tau) = \sum_{l=0}^{L-1} \alpha_l a^H(v_l) \otimes a^H(h_l) \delta(\tau - \tau_l) e^{j2\pi f_c \tau_l} \quad (2) \qquad\qquad (66).$$

where $a(v_l)$ is a $M \times 1$ elevation channel vector defined as : $a(v_l) = [1e^{-jv_l},...,e^{-j(M-1)v_l}]^T$ with $v_l := \frac{2\pi d_V}{\lambda_c} cos\theta_l$ , and

$a(h_l)$ is a $N \times 1$ azimuth channel vector defined as $a(h_l) = [1\ e^{-jh_l},...,e^{-j(N-1)h_l}]^T$ with $h_l := \frac{2\pi d_H}{\lambda_c} sin\theta_l sin\varphi_l.$

Accordingly, the frequency domain representation of the model described in REF 2 is given by:

$$H(f) = \sum_{l=0}^{L-1} \alpha_l a^H(v_l) \otimes a^H(h_l) e^{-j2\pi(f-f_c)\tau_l} \qquad\qquad (67).$$

In the Line of Sight (LOS) case, the frequency domain baseband equivalent model reduces to

$$H(f) = \alpha a^H(v) \otimes a^H(h) e^{-j2\pi(f-f_c)\tau_0} \qquad\qquad (68).$$

where $\alpha := \alpha_0$, $v := v$ and $h := h_0$. At a particular frequency (or subcarrier), the spatial covariance matrix of $H(f)$ is given by:

$$R_H = E[|\alpha|^2][a(v)a^H(v)] \otimes [a(h)a^H(h)] \quad (3) \qquad\qquad (69).$$

Definition: Rank-1 channel direction vector

Rank-1 channel direction matrix, or the principal eigenvector $\alpha$ of $R_H$ is given by:

$$\alpha = \beta a(v) \otimes a(h) \qquad\qquad (70).$$

where

$$a(v) = \left[1\ e^{-jv}, ..., e^{-j(M-1)v}\right]^T \text{with } v := \frac{2\pi d_V}{\lambda_c} cos\theta_0$$
$$(71);$$

and

$$a(h) = \left[1\ e^{-jh}, ..., e^{-j(N-1)h}\right]^T \text{with } h := \frac{2\pi d_H}{\lambda_c} sin\theta_0 sin\varphi_0$$
$$(72).$$

with $\theta_0$ being the elevation angle and $\varphi_0$ being the azimuth angle, and β is a normalized factor.

Certain embodiments include, based on the structure of the spatial covariance matrix $R_H$, a codebook based on the Kronecker product of two DFT vectors. It is intended that the two DFT vectors respectively quantize conjugates of the elevation and the azimuth channel vectors $a(v) = [1e^{-jv}, ...,e^{-j(M-1)v}]^T$ and $a(h) = [1e^{-jh}, ..., e^{-j(N-1)h}]^T$ that construct the rank-1 channel direction vector $\alpha = \beta a(v) \otimes a(h)$.

NodeB 102 antenna spacing configuration for configuring a codebook

In order to quantize $a(v)$ and $a(h)$, either the elevation and/or azimuth angles $\theta_0$ and $\varphi_0$, or their exponents $v$ and $h$, can be quantized. An advantage of the exponent quantization is that UE 116 can form horizontal and vertical precoding vectors from the codebook (since they are DFT vectors) without knowing the horizontal and vertical antenna spacing ($d_V$ and $d_H$) at NodeB 102. Alternatively, for angle quantization, antenna spacing needs to be configured to UE 116 so that UE 116 can construct the horizontal and vertical pre-coding vectors from the codebook. This configuration can be sent to UE 116 via higher layer signaling such as RRC. The horizontal and vertical antenna spacings ($d_V$ and $d_H$) can take different values based on the configuration. In one example, NodeB 102 can configure at least one of $d_H/\lambda_c$ and $d_V/\lambda_c$ values, each chosen from 4 candidate values as shown below.

Table 4

| Horizontal antenna spacing ($d_H/\lambda_c$) | {0.5, 1.0, 2.0, 4.0} |
|---|---|
| Vertical antenna spacing ($d_V/\lambda_c$) | {0.5, 1.0, 2.0, 4.0} |

The antenna spacing information can be either cell-specifically or UE-specifically configured.

Unless otherwise specified, a closely spaced antenna configuration is assumed throughout the remainder of the disclosure, where $d_H = d_V = 0.5\lambda_c$ are considered, $v: = \pi\cos\theta_0$ and $h: = \pi\sin\theta_0\sin\varphi_0$. Having these observations, a product codebook with independently quantizing two channel vectors $a(v)$ and $a(h)$ can be devised, as in the following.

A rank-1 codebook ($W$) for 2D co-polarized array with uniformly quantizing the exponents $h=\pi\sin\theta_0\sin\varphi_0$ and $v= \pi\cos\theta_0$. A codeword $w$ is indexed by two non-negative integers, $n$ and $m$, and represented by a Kronecker product:

$$w(n,m) = \beta w_v(m) \otimes w_h(n), \qquad w_v(m) \in W_v, w_h(n) \in W_h$$

In one method, $W_v$ is defined as a set of DFT vectors uniformly sampling $[0,2\pi]$ with $P_v$ quantization levels, and $W_h$ is defined as a set of DFT vectors uniformly sampling $[0,2\pi]$ with $P_v$ and $Q_h$ quantization levels:

$$W_v = \left\{ b_{P_v,M}(m) : m = 0, \ldots, P_v - 1 \right\}; \text{ and } W_h = \left\{ b_{Q_h,N}(n) : n = 0, \ldots, Q_h - 1 \right\}.$$

In this method, $e^{-jv}$ and $e^{-jh}$ of the rank-1 channel direction vectors are respectively quantized by $q_{P_v} = e^{-j\frac{2\pi n}{P_v}}$ and $q_{Q_h} = e^{-j\frac{2\pi n}{Q_h}}$. In one example $P_v$=4 and $Q_h$ = 16 and M=N=4; then

$$W_v = \left\{ w_v(n) = \left[ 1 \; e^{j\frac{2\pi n}{4}} \; e^{\frac{j2\pi 2n}{4}} \; e^{\frac{j2\pi 3n}{4}} \right]^T : n = 0,1,2,3 \right\} \qquad (73);$$

and

$$W_h = \left\{ w_h(n) = \left[ 1 \; e^{j\frac{2\pi n}{16}} \; e^{\frac{j2\pi 2n}{16}} \; e^{\frac{j2\pi 3n}{16}} \right]^T : n = 0,1,2, \ldots 15 \right\}. \qquad (74).$$

An example UE implementation on PMI selection: in certain embodiments, UE 116 selects v-PMI and h-PMI by maximizing the cosine of the hyper angle formed by the two vectors $H(f)$ and $w_1$, as in the following:

$$\widehat{w_1} = \arg \max_{w_1 \in W_v \otimes W_h} = \arg \max_{\substack{m=0,1,\ldots,P_v-1, \\ n=0,1,\ldots,Q_h-1}} \frac{|a^H(v)w_v(m)|^2}{\|a(v)\|^2\|w_v(m)\|^2} \frac{|a^H(h)w_h(n)|^2}{\|a(h)\|^2\|w_h(n)\|^2}. \qquad (75).$$

CSI feedback: in certain embodiments, NodeB 102 configures UE 116 to report two PMI indices, a vertical PMI (v-PMI), an index of a codeword in v-codebook and a horizontal PMI (h-PMI), an index of a codeword in h-codebook. Upon receiving the two PMI indices, NodeB 102 constructs a rank-1 channel by taking a Kronecker product of the two precoding vectors indicated by the two PMI indices. For a set of antenna ports $L$, a v-PMI value of $m \in \{0,1, \cdots, P_v - 1\}$

and a h-PMI value of $n \in [0,1, \cdots, Q_h - 1]$ corresponds to the codebook indices $m$ and $n$ given in Table

Table 5 Codebook for 1-layer CSI reporting using a set of V and H antenna ports

| v-PMI $m$ | h-PMI $n$ | | | | | |
|---|---|---|---|---|---|---|
| | 0 | 1 | ... | $n$ | ... | $Q_m$ - 1 |
| $\{0,1,\cdots,P_v - 1\}$ | $W_{m,0}$ | $W_{m,1}$ | ... | $W_{m,n}$ | ... | $W_{m,Q_m-1}$ |
| $\boldsymbol{w}(n, m) = \beta \boldsymbol{w}_v(m) \otimes \boldsymbol{w}_h(n)$ | | | | | | |

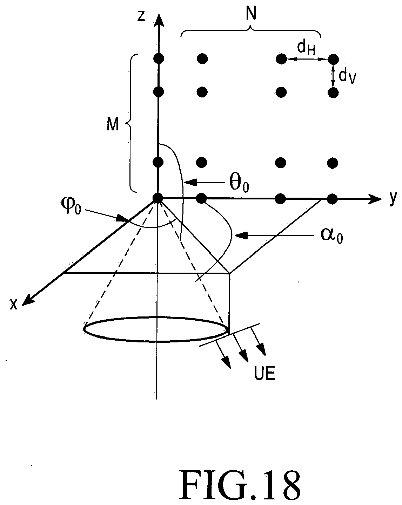

Dependency of azimuth angle distribution on elevation angle. To understand the dependency of two PMIs, an alternative expression for the parameter $h_{mn}$ is derived as in FIGURE 18. Let $\alpha_0$ be the angle between the direction of departure and the positive y-axis direction. As can be seen from FIGURE 18, the following geometric relationships between $\theta_0$, $\varphi_0$, and $\alpha_0$ can be obtained:

$$\sin\theta_0 = \frac{\sqrt{x_0^2+y_0^2}}{\sqrt{x_0^2+y_0^2+z_0^2}}, \sin\varphi_0 = \frac{y_0}{\sqrt{x_0^2+y_0^2}}, \text{and} \cos\alpha_0 = \frac{y_0}{\sqrt{x_0^2+y_0^2+z_0^2}} \qquad (76).$$

Thus, $\cos\alpha_0 = \sin\theta_0\sin\varphi_0$. The parameter $v_0$ can be rewritten as $v_0 = \frac{2\pi d_V}{\lambda_c}\cos\alpha_0.$

Alternative definition: Rank-1 channel direction vector:

In its alternative definition according to the observation here, rank-1 channel direction matrix, or the principal eigenvector $\alpha$ of $\boldsymbol{R}_H$ is given by:

$$\boldsymbol{\alpha} = \beta \boldsymbol{a}(v) \otimes \boldsymbol{a}(h) \qquad (77).$$

where

$$\boldsymbol{a}(v) = \left[1\ e^{-jv}, \dots, e^{-j(M-1)v}\right]^T \text{with } v := \frac{2\pi d_V}{\lambda_c}\cos\theta_0 \qquad (78);$$

$$\boldsymbol{a}(h) = \left[1\ e^{-jh}, \dots, e^{-j(N-1)h}\right]^T \text{with } h := \frac{2\pi d_H}{\lambda_c}\cos\alpha_0 \qquad (79).$$

with $\theta_0$ being the elevation angle and $\alpha_0$ being the angle between the direction of departure and the positive y-axis direction, and $\beta$ is a normalizing factor.

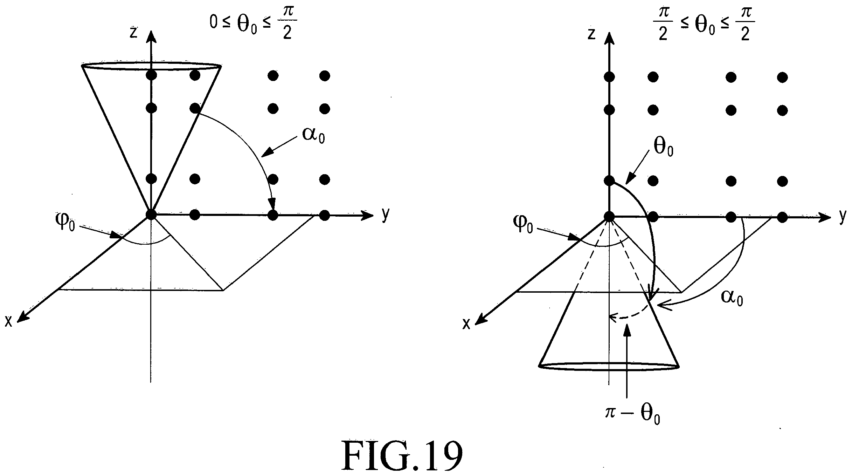

FIGURE 19 illustrates the relationship between angles $\alpha_0$ and $\theta_0$ according to embodiments of the present disclosure. The embodiment of the relationship shown in FIGURE 19 is for illustration only. Other embodiments could be used without departing from the scope of the present disclosure.

Referring to FIGURE 19, the relation between the parameters $\theta_0$ and $\alpha_0$ satisfy the following constraints:

$$\text{For } 0 \leq \theta_0 \leq \frac{\pi}{2}, \ \frac{\pi}{2} - \theta_0 \leq \alpha_0 \leq \frac{\pi}{2} + \theta_0 \qquad (80)$$

$$\text{For } \frac{\pi}{2} \leq \theta_0 \leq \pi, \ \theta_0 - \frac{\pi}{2} \leq \alpha_0 \leq \frac{3\pi}{2} - \theta_0 \qquad (81)$$

FIGURE 20 illustrates the feasible region of $\theta$ and $\alpha$ according to embodiments of the present disclosure. The embodiment of the feasible region shown in FIGURE 20 is for illustration only. Other embodiments could be used without departing from the scope of the present disclosure.

In the example shown in FIGURE 20, the parameters $\theta$ and $\alpha$ are constrained within the shaded (red) region. Note that if $\theta = \frac{\pi}{2}$, then UE 116 is in the XY plane, hence $\alpha$ can take any value in [0, $\pi$]. Alternatively, for $\theta$ = 0 or $\pi$, $\alpha$ can take only one value $\alpha = \frac{\pi}{2}$. In general, the length of range of possible values of $\alpha$ decreases for $\theta$ values away from $\frac{\pi}{2}$. Also, this behavior is symmetric about $\theta = \frac{\pi}{2}$. FIGURE 20 further illustrates the potential benefits of exploiting the dependency of two PMIs: either the feedback overhead can be reduced or the throughput performance can be improved.

FIGURE 21 illustrates the dependency of the exponents $v$ and $h$ when $\varphi_0 \in [-\pi,\pi]$ according to embodiments of the present disclosure. The embodiment of the dependency shown in FIGURE 21 is for illustration only. Other embodiments could be used without departing from the scope of the present disclosure.

According to its alternative definition, rank-1 channel direction vectors are obtained with the cosine values of $\theta$ and $\alpha$, i.e. $\pi \cos \theta$ and $\pi \cos \alpha$. In FIGURE 21, these cosine values are plotted where each point represents a possible pair of ($v$, $h$) exponents. The white rectangle consists of all possible the ($v$, $h$) pairs without considering the constraints in equations 80 and 81 while the gray oval consists of the ($v$, $h$) pairs that takes the constraints in equations 80 and 81 into account. Clearly, the area of the oval is smaller than that of the rectangle. It implies that there exists a potential saving if the dependency of the v-PMI and the h-PMI is exploited.

Codebook 2: A rank-1 codebook ($\boldsymbol{W}$) for 2D co-polarized array with exploiting the dependency between angles $\theta$ and $\alpha$:

Example 1:

A codeword $\boldsymbol{w}$ is indexed by two non-negative integers, $m$ and $n,$ and represented by a Kronecker product:

$$w(m, n) = \beta \boldsymbol{w}_v(m) \otimes \boldsymbol{w}_h(m, n), \qquad \boldsymbol{w}_v(m) \in \boldsymbol{W}_v, \boldsymbol{w}_h(m, n) \in \boldsymbol{W}_h(m)$$

$\boldsymbol{W}_v$ and $\boldsymbol{W}_h$ are defined as two sets of DFT precoding vectors:

$$\boldsymbol{W}_v = \left\{ \boldsymbol{b}_{P_v,M}(m): m = 0, ..., P_v - 1 \right\}; \text{ and } \boldsymbol{W}_h = \left\{ \boldsymbol{b}_{Q_h,N}(m, n): n \in S_m \right\}.$$

In this method, $e^{-jv}$ and $e^{-jh}$ of the rank-1 channel direction vectors are respectively quantized by $q_{P_v} = e^{-jv_m} = e^{-j\frac{2m\pi}{P_v}}$ and $q_{Q_h} = e^{-jh_{mn}}$, where $h_{mn}$ is obtained by uniformly quantizing the range of possible values of $\alpha$ into $Q_h$ levels based on the v - PMI index $m$. Furthermore, codeword $\boldsymbol{w}_v$ is determined based upon a single index $m$. However codeword $\boldsymbol{w}_h$ is determined based upon index $m$ as well as $n$, motivated by the dependency of $\alpha$ (or exponent $h$) on $\theta$ (exponent $v$).

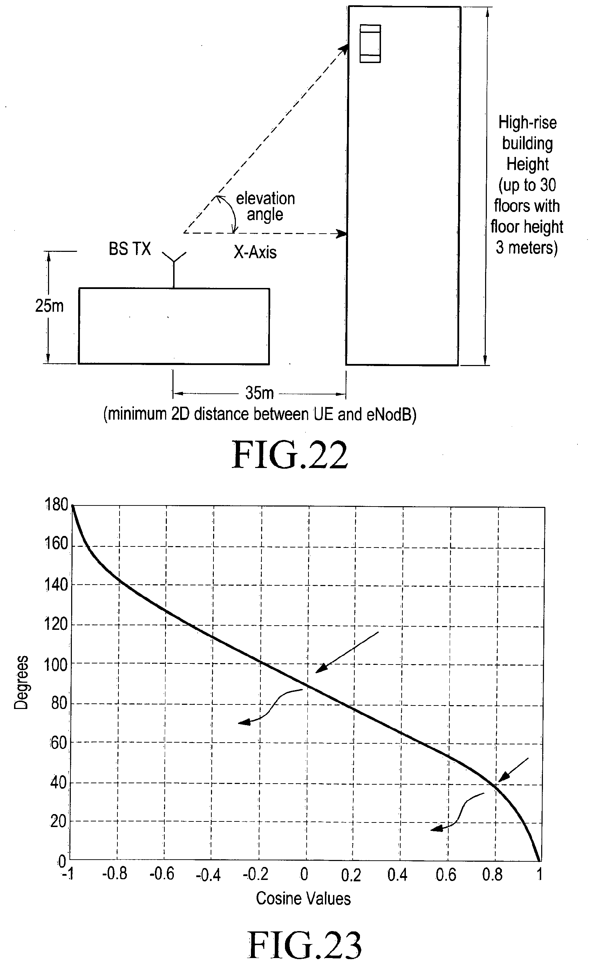

FIGURE 22 illustrates a high-rise scenario according to embodiments of the present disclosure. The embodiment of the high-rise scenario shown in FIGURE 22 is for illustration only. Other embodiments could be used without departing from the scope of the present disclosure.

PMI construction example 1: 2-bit uniform sampling of [0,2$\pi$] for v.

In one example construction of codebook 2, $P_v$=4 number of states are used for uniformly quantizing $v = \pi \cos \theta + \pi \in [0,2\pi]$ utilizing $q_4 = e^{-j\frac{2\pi}{4}}$ and corresponding DFT vector codebook $\boldsymbol{W}_v = \{\boldsymbol{b}_{4,M}(m): m = 0,1,2,3\}$. Then, a quantization range of $h = \pi \cos \alpha + \pi$ is determined dependent upon the selected value of $v$ and $\theta$, according to the feasibility region in FIGURE 22. Table 6 shows the resulting PMI table, where $Q_h$ = 16, for example. When this codebook is configured, a UE selects $\boldsymbol{w}(m, n)$ and corresponding indices $m$ and $n$ maximizing the channel quality, and feeds back the indices $m$ and $n$.

Table 6 PMI construction example 1

| $v$-P MI index $m$ | $v_m$ $v_m = \dfrac{2m\pi}{4}$ | $\theta_m$ | Quantizatio n range of $\alpha$ | Quantizatio n range of $h$ | $h$-PMI index $n$ | $h_{m,n}$ |
|---|---|---|---|---|---|---|
| 0 | 0 | 0 | $\left[-\dfrac{\pi}{2}, \dfrac{\pi}{2}\right]$ | [0, 0] | $n \in \{0,1,...,Q_h\text{-}1\}$ | 0 |
| 1 | $\dfrac{\pi}{2}$ | $\dfrac{2\pi}{3}$ | $\left[\dfrac{\pi}{6}, \dfrac{5\pi}{6}\right]$ | $\left[0, \sqrt{3}\pi\right]$ | $n \in \{0,1,...,Q_h\text{-}1\}$ | $\dfrac{\pi}{6} + \dfrac{\sqrt{3}\pi n}{Q_h}$ |
| 2 | $\pi$ | $\dfrac{\pi}{2}$ | $[0, \pi]$ | $[0, 2\pi]$ | $n \in \{0,1,...,Q_h\text{-}1\}$ | $\dfrac{2\pi n}{Q_h}$ |
| 3 | $\dfrac{3\pi}{2}$ | $\dfrac{\pi}{3}$ | $\left[\dfrac{\pi}{6}, \dfrac{5\pi}{6}\right]$ | $\left[0, \sqrt{3}\pi\right]$ | $n \in \{0,1,...,Q_h\text{-}1\}$ | $\dfrac{\pi}{6} + \dfrac{\sqrt{3}\pi n}{Q_h}$ |

Codebook 2: A rank-1 codebook ($W$) for 2D co-polarized array with exploiting the dependency between angles $\theta$ and $\alpha$: example 2. A codeword $w$ is indexed by two non-negative integers, $m$ and $n$, and represented by a Kronecker product:

$$w(m, n) = \beta w_v(m) \otimes w_h(m, n), \qquad w_v(m) \in W_v, w_h(m, n) \in W_h(m)$$

$W_v$ and $W_h$ are defined as two sets of DFT precoding vectors:

$$W_v = \left\{ w_v(m) = \left[1\; e^{-jv_m}, ..., e^{-j(M-1)v_m}\right]^T : m = 0, ..., P_v - 1 \right\} \;\; ; \;\; \text{and} \;\; W_h = \left\{ b_{Q_h, N}(m, n) : n \in S_m \right\} \tag{82}.$$

Where $v_m := \pi + \pi \cos \theta_m$.

In this method, $e^{-jv}$ and $e^{-jh}$ of the rank-1 channel direction vectors are respectively quantized by $v_m := \pi + \pi\cos\theta_m$ and $h_{mn}$ which is obtained by uniformly quantizing the range of possible values of $\alpha$ into $Q_h$ levels based on the v - PMI index $m$. Furthermore, codeword $w_v$ is determined based upon a single index $m$. However codeword $w_h$ is determined based upon index $m$ as well as $n$, motivated by the dependency of $\alpha$ (or exponent $h$) on $\theta$ (or exponent $v$).

PMI construction example 2: 4-bit uniform sampling of [0, $\pi$] for $\theta_m$, fixed number of bits for h-channel quantization.

In one example construction of codebook 2, $P_v$=16 number of states are used for uniformly quantizing $\theta \in [0, \pi]$ with $\theta_m = \dfrac{m\pi}{16}$. Then the resulting $v_m = \pi + \pi\cos\dfrac{m\pi}{16}$. In addition, for h-channel quantization, $Q_h$ = 16 is the number of states as shown in Table 12.

Table 7 PMI construction example 2 (with $v_m = \pi + \pi\cos\theta_m$, and $\theta_m = \dfrac{m\pi}{16}$)

| $v$-PMI index $m$ | $\theta_m = \dfrac{m\pi}{16}$ | Quantization range of $\alpha$ | Quantization range of $h$ | $h$-PMI index $n$ | $h_{m,n}$ |
|---|---|---|---|---|---|
| 0 | 0 | $\left[\dfrac{8\pi}{16}, \dfrac{8\pi}{16}\right]$ | $[0, 0]$ | $n \in \{0,1 \,...,\, Q_h - 1\}$ | 0 |
| 1 | $\dfrac{\pi}{16}$ | $\left[\dfrac{7\pi}{16}, \dfrac{9\pi}{16}\right]$ | $\left[0, 2\pi\cos\dfrac{7\pi}{16}\right]$ | $n \in \{0,1,...,\, Q_h - 1\}$ | $\dfrac{7\pi}{16} + \left(2\pi n\cos\dfrac{7\pi}{16}\right)/Q_h$ |
| 2 | $\dfrac{2\pi}{16}$ | $\left[\dfrac{6\pi}{16}, \dfrac{10\pi}{16}\right]$ | $\left[0, 2\pi\cos\dfrac{6\pi}{16}\right]$ | $n \in \{0,1, ...,\, Q_h - 1\}$ | $\dfrac{6\pi}{16} + \left(2\pi n\cos\dfrac{6\pi}{16}\right)/Q_h$ |
| 3 | $\dfrac{3\pi}{16}$ | $\left[\dfrac{5\pi}{16}, \dfrac{11\pi}{16}\right]$ | $\left[0, 2\pi\cos\dfrac{5\pi}{16}\right]$ | $n \in \{0,1, ...,\, Q_h - 1\}$ | $\dfrac{5\pi}{16} + \left(2\pi n\cos\dfrac{5\pi}{16}\right)/Q_h$ |
| 4 | $\dfrac{4\pi}{16}$ | $\left[\dfrac{4\pi}{16}, \dfrac{12\pi}{16}\right]$ | $\left[0, 2\pi\cos\dfrac{4\pi}{16}\right]$ | $n \in \{0,1, ...,\, Q_h - 1\}$ | $\dfrac{4\pi}{16} + \left(2\pi n\cos\dfrac{4\pi}{16}\right)/Q_h$ |
| 5 | $\dfrac{5\pi}{16}$ | $\left[\dfrac{3\pi}{16}, \dfrac{13\pi}{16}\right]$ | $\left[0, 2\pi\cos\dfrac{3\pi}{16}\right]$ | $n \in \{0,1 \,...,\, Q_h - 1\}$ | $\dfrac{3\pi}{16} + \left(2\pi n\cos\dfrac{3\pi}{16}\right)/Q_h$ |
| 6 | $\dfrac{6\pi}{16}$ | $\left[\dfrac{2\pi}{16}, \dfrac{14\pi}{16}\right]$ | $\left[0, 2\pi\cos\dfrac{2\pi}{16}\right]$ | $n \in \{0,1,...,Q_h - 1\}$ | $\dfrac{2\pi}{16} + \left(2\pi n\cos\dfrac{2\pi}{16}\right)/Q_h$ |
| 7 | $\dfrac{7\pi}{16}$ | $\left[\dfrac{\pi}{16}, \dfrac{15\pi}{16}\right]$ | $\left[0, 2\pi\cos\dfrac{\pi}{16}\right]$ | $n \in \{0,1, ...,\, Q_h - 1\}$ | $\dfrac{\pi}{16} + \left(2\pi n\cos\dfrac{\pi}{16}\right)/Q_h$ |
| 8 | $\dfrac{8\pi}{16}$ | $[0, \pi]$ | $[0, 2\pi]$ | $n \in \{0,1, ...,\, Q_h - 1\}$ | $(2\pi n)/Q_h$ |
| 9 | $\dfrac{9\pi}{16}$ | $\left[\dfrac{\pi}{16}, \dfrac{15\pi}{16}\right]$ | $\left[0, 2\pi\cos\dfrac{\pi}{16}\right]$ | $n \in \{0,1, ...,\, Q_h - 1\}$ | $\dfrac{\pi}{16} + \left(2\pi n\cos\dfrac{\pi}{16}\right)/Q_h$ |
| 10 | $\dfrac{10\pi}{16}$ | $\left[\dfrac{2\pi}{16}, \dfrac{14\pi}{16}\right]$ | $\left[0, 2\pi\cos\dfrac{2\pi}{16}\right]$ | $n \in \{0,1, ...,\, Q_h - 1\}$ | $\dfrac{2\pi}{16} + \left(2\pi n\cos\dfrac{2\pi}{16}\right)/Q_h$ |
| 11 | $\dfrac{11\pi}{16}$ | $\left[\dfrac{3\pi}{16}, \dfrac{13\pi}{16}\right]$ | $\left[0, 2\pi\cos\dfrac{3\pi}{16}\right]$ | $n \in \{0,1, ...,\, Q_h - 1\}$ | $\dfrac{3\pi}{16} + \left(2\pi n\cos\dfrac{3\pi}{16}\right)/Q_h$ |

(continued)

| v-PMI index $m$ | $\theta_m = \dfrac{m\pi}{16}$ | Quantization range of $\alpha$ | Quantization range of $h$ | $h$-PMI index $n$ | $h_{m,n}$ |
|---|---|---|---|---|---|
| 12 | $\dfrac{12\pi}{16}$ | $\left[\dfrac{4\pi}{16}, \dfrac{12\pi}{16}\right]$ | $\left[0, 2\pi\cos\dfrac{4\pi}{16}\right]$ | $n \in \{0,1,...,Q_h - 1\}$ | $\dfrac{4\pi}{16} + \left(2\pi n\cos\dfrac{4\pi}{16}\right)/Q_h$ |
| 13 | $\dfrac{13\pi}{16}$ | $\left[\dfrac{5\pi}{16}, \dfrac{11\pi}{16}\right]$ | $\left[0, 2\pi\cos\dfrac{5\pi}{16}\right]$ | $n \in \{0,1,...,Q_h - 1\}$ | $\dfrac{5\pi}{16} + \left(2\pi n\cos\dfrac{5\pi}{16}\right)/Q_h$ |
| 14 | $\dfrac{14\pi}{16}$ | $\left[\dfrac{6\pi}{16}, \dfrac{10\pi}{16}\right]$ | $\left[0, 2\pi\cos\dfrac{6\pi}{16}\right]$ | $n \in \{0,1,...,Q_h - 1\}$ | $\dfrac{6\pi}{16} + \left(2\pi n\cos\dfrac{6\pi}{16}\right)/Q_h$ |
| 15 | $\dfrac{15\pi}{16}$ | $\left[\dfrac{7\pi}{16}, \dfrac{9\pi}{16}\right]$ | $\left[0, 2\pi\cos\dfrac{7\pi}{16}\right]$ | $n \in \{0,1,...,Q_h - 1\}$ | $\dfrac{7\pi}{16} + \left(2\pi n\cos\dfrac{7\pi}{16}\right)/Q_h$ |

PMI construction example 3: 4-bit uniform sampling of $[0, \pi]$ for $\theta_m$, the number of bits for h-channel quantization determined as a function of $\theta_m$: In one example construction of codebook 2 shown in Table 8, $P_v$=16 number of states are used for uniformly quantizing $\theta \in [0, \pi]$ with $\boldsymbol{\theta_m = \dfrac{m\pi}{16}}.$ Then the resulting $v_m = \pi + \pi\cos\dfrac{m\pi}{16}.$ Alternatively, the number of states for h-channel quantization, $Q_h$ is determined as a function of $m$. For example, when $m$=0, only one value is used for h-PMI ($Q_h$ = 1), and when $m$=2, 3 values are used for h-PMI ($Q_h$ = 3). The PMI indices ($m,n$) are fed back by UE 116 to NodeB 102 by means of a composite PMI $i$ as shown in Table 14.

Table 8 Codebook for 1-layer CSI reporting using a set of antenna ports **L**

| v-PMI ($m$) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| $Q_h$ | 1 | 1 | 3 | 3 | 5 | 5 | 7 | 7 | 9 | 7 | 7 | 5 | 5 | 3 | 3 | 1 |
| h-PMI ($n$) | 4 | 4 | 3 | 3 | 2 | 2 | 1 | 1 | 0 | 1 | 1 | 2 | 2 | 3 | 3 | 4 |
| | | | 4 | 4 | 3 | 3 | 2 | 2 | 1 | 2 | 2 | 3 | 3 | 4 | 4 | |
| | | | 5 | 5 | 4 | 4 | 3 | 3 | 2 | 3 | 3 | 4 | 4 | 5 | 5 | |
| | | | | | 5 | 5 | 4 | 4 | 3 | 4 | 4 | 5 | 5 | | | |
| | | | | | 6 | 6 | 5 | 5 | 4 | 5 | 5 | 6 | 6 | | | |
| | | | | | | | 6 | 6 | 5 | 6 | 6 | | | | | |
| | | | | | | | 7 | 7 | 6 | 7 | 7 | | | | | |
| | | | | | | | | | 7 | | | | | | | |
| | | | | | | | | | 8 | | | | | | | |

Table 9 Composite PMI for 1-layer CSI Reporting

| Composite PMI index $i$ | (H,V) PMI index | Composite PMI index | (H,V) PMI index | Composite PMI index | (H,V) PMI index | Composite PMI index | (H,V) PMI index | Composite PMI index | (H,V) PMI index |
|---|---|---|---|---|---|---|---|---|---|
| 0 | (0,4) | 16 | (5,5) | 32 | (8,0) | 48 | (10,2) | 64 | (13,3) |
| 1 | (1,4) | 17 | (5,6) | 33 | (8,1) | 49 | (10,3) | 65 | (13,4) |
| 2 | (2,3) | 18 | (6,1) | 34 | (8,2) | 50 | (10,4) | 66 | (13,5) |
| 3 | (2,4) | 19 | (6,2) | 35 | (8,3) | 51 | (10,5) | 67 | (14,3) |
| 4 | (2,5) | 20 | (6,3) | 36 | (8,4) | 52 | (10,6) | 68 | (14,4) |
| 5 | (3,3) | 21 | (6,4) | 37 | (8,5) | 53 | (10,7) | 69 | (14,5) |
| 6 | (3,4) | 22 | (6,5) | 38 | (8,6) | 54 | (11,2) | 70 | (15,4) |
| 7 | (3,5) | 23 | (6,6) | 39 | (8,7) | 55 | (11,3) | | |
| 8 | (4,2) | 24 | (6,7) | 40 | (9,1) | 56 | (11,4) | | |
| 9 | (4,3) | 25 | (7,1) | 41 | (9,2) | 57 | (11,5) | | |
| 10 | (4,4) | 26 | (7,2) | 42 | (9,3) | 58 | (11,6) | | |
| 11 | (4,5) | 27 | (7,3) | 43 | (9,4) | 59 | (12,2) | | |
| 12 | (4,6) | 28 | (7,4) | 44 | (9,5) | 60 | (12,3) | | |
| 13 | (5,2) | 29 | (7,5) | 45 | (9,6) | 61 | (12,4) | | |
| 14 | (5,3) | 30 | (7,6) | 46 | (9,7) | 62 | (12,5) | | |
| 15 | (5,4) | 31 | (7,7) | 47 | (10,1) | 63 | (12,6) | | |

Codebook subsampling of PMI example 3:

In LTE/LTE-Advanced dowlink, UE 116 reports CQI, PMI, or RI to NodeB 102 via a feedback channel. There are two types of feedback channels: PUCCH and PUSCH. Periodic CSI is transmitted via PUCCH in a semi-statically configured manner while aperiodic CSI is transmitted via PUSCH in a dynamic manner. Compared with PUSCH, PUCCH has a more stringent requirement on the payload size. For example, in Release 12, period CSI is transmitted using PUCCH format 2/2a/2b with a payload size up to 11 bits. In Release 12, codebook subsampling is used to meet the PUCCH payload size requirement. Another method to reduce overhead and complexity in LTE is PMI codebook subset restriction (CSR). In CSR, any codeword can be disabled via CSR bitmap in radio resource control (RRC) signaling. UE 116 only needs to search the restricted codebook subset for PMI reporting. However, a large codebook size leads to a large overhead related to the transmission of a long bitmap. Seeing these issues, here we propose to use the PMI codebook 3 shown in Table 13 and Table 14 for PUSCH feedback, and to use a subsampled version of the PMI codebook 3 for PUCCH feedback.

In one example, the pairs of ($m,n$) of the PMI codebook 3 are uniformly subsampled in two dimension as shown in Table . Out of this subsampling, the total number of states to be fed back is reduced from 70 to 25, in which 25 states can fit in 5 bits. The composite PMI table to map composite PMI index $i$ to ($m,n$) can be constructed for Table 15, as done for PMI codebook 3.

Table 10 Codebook for 1-layer CSI reporting using a set of antenna ports L

| v-PMI ($m$) | 0 | 2 | 4 | 6 | 8 | 10 | 12 | 14 | 15 |
|---|---|---|---|---|---|---|---|---|---|
| $Q_h$ | 1 | 2 | 3 | 4 | 5 | 4 | 3 | 2 | 1 |

(continued)

| v-PMI (*m*) | 0 | 2 | 4 | 6 | 8 | 10 | 12 | 14 | 15 |
|---|---|---|---|---|---|---|---|---|---|
| h-PMI (*n*) | 4 | 3 | 2 | 1 | 0 | 1 | 2 | 3 | 4 |
| | | 5 | 4 | 3 | 2 | 3 | 4 | 5 | |
| | | | 6 | 5 | 4 | 5 | 6 | | |
| | | | | 7 | 6 | 7 | | | |
| | | | | | 8 | | | | |

PMI construction example 4: non-uniform quantization of θ. In PMI construction example 4 in Table 16, $\theta$ is non-uniformly quantized with values in a set of {π/4, π/2, 5π/8, 3π/4}. In the urban macro/micro scenarios, the distribution of elevation angle $\theta$ is concentrated around π/2, and there are richer distributions for $\theta > \pi/2$ than $\theta < \pi/2$. To reflect this distribution, certain embodiments allocate more states for $\theta > \pi/2$ than $\theta < \pi/2$. In this example, 2 states {5π/8, 3π/4} are allocated to quantize $\theta > \pi/2$, and a single state {π/4} is allocated to quantize $\theta < \pi/2$.

Table 11 PMI construction example 4

| *v*-PMI index *m* | $\theta_m$ | Quantization range of $\alpha$ | *h*-PMI index *n* | $h_{m,n}$ |
|---|---|---|---|---|
| 0 | $\dfrac{\pi}{4}$ | $\left[\dfrac{\pi}{4}, \dfrac{3\pi}{4}\right]$ | $n \in \{0,1, Q_h - 1\}$ | $\dfrac{\pi}{4} + \dfrac{\sqrt{2}\pi n}{Q_h}$ |
| | $\dfrac{\pi}{2}$ | $[0,\pi]$ | $n \in \{0,1, ..., Q_h - 1\}$ | $\dfrac{2\pi n}{Q_h}$ |
| | $\dfrac{5}{8}\pi$ | $\left[\dfrac{\pi}{8}, \dfrac{7\pi}{8}\right]$ | $n \in \{0,1, ..., Q_h - 1\}$ | $\dfrac{\pi}{8} + \dfrac{\sqrt{2 + \sqrt{2}}\pi n}{Q_h}$ |
| | $\dfrac{3\pi}{4}$ | $\left[\dfrac{\pi}{4}, \dfrac{3\pi}{4}\right]$ | $n \in \{0,1, ..., Q_h - 1\}$ | $\dfrac{\pi}{4} + \dfrac{\sqrt{2}\pi n}{Q_h}$ |

Configurable rank-1 codebook:

Referring to FIGURE 22, a high-rise scenario is currently considered in the 3GPP RAN 1 meeting. The elevation angle can be as small as 30 degrees. This embodiment presents a codebook **W** that has two sub-codebooks. One sub-codebook can be configured for those UEs located in low-rise buildings while the other sub-codebook can be configured for those UEs located in high-rise buildings. A sub-codebook can be configured by NodeB 102 via RRC signaling, either UE specifically or cell specifically. The two sub-codebook may have different resolutions. In one example, low-rise and high-rise are referred to as the scenarios where the elevation angles are restricted to $\left[\dfrac{5\pi}{12}, \dfrac{7\pi}{12}\right]$ and $\left[\dfrac{\pi}{6}, \dfrac{5\pi}{12}\right]$, respectively. The low-rise sub-codebook $W_{LR}$ has coarse codebook resolution on both the vertical and horizontal domains as compared with the high-rise sub-codebook $W_{HR}$. The low-rise sub-codebook $W_{LR}$ with $P_\theta = Q_\alpha = 16$ is given by:

$$W_{LR} = \left\{\beta a(u_m) \otimes a(s_n): 0 \leq \frac{5\pi}{12} + \frac{m\pi}{96} \leq \frac{\pi}{2}, \frac{\pi}{12} - \frac{m\pi}{96} \leq \frac{n\pi}{8} \leq \frac{\pi}{12} + \frac{m\pi}{96}\right\}$$
$$\bigcup\left\{\beta a(u_m) \otimes a(s_n): \frac{\pi}{2} \leq \frac{5\pi}{12} + \frac{m\pi}{96} \leq \pi, \frac{\pi}{12} + \frac{m\pi}{96} \leq \frac{n\pi}{8}\right.$$
$$\left. \leq \frac{25\pi}{12} - \frac{m\pi}{96}\right\}$$

where $v_m = \pi\cos\left(\frac{5\pi}{12} + \frac{m\pi}{96}\right)$ and $s_n = \pi\cos\left(\frac{n\pi}{8}\right)$, while the high-rise sub-codebook $W_{HR}$ with $P_\theta = Q_\alpha = 32$ is given by

$$W_{HR} = \left\{\beta a(u_m)\otimes a(s_n): 0 \leq \frac{\pi}{6} + \frac{m\pi}{128} \leq \frac{\pi}{2}, \frac{\pi}{3} - \frac{m\pi}{128} \leq \frac{n\pi}{16} \leq \frac{2\pi}{3} + \frac{m\pi}{128}\right\}$$
$$\cup \left\{\beta a(u_m)\otimes a(s_n): \frac{\pi}{2} \leq \frac{\pi}{6} + \frac{m\pi}{128} \leq \pi, \frac{2\pi}{3} + \frac{m\pi}{128} \leq \frac{n\pi}{16} \leq \frac{7\pi}{3} - \frac{m\pi}{96}\right\}$$
(83).

where $v_m = \pi\cos\left(\frac{\pi}{6} + \frac{m\pi}{128}\right)$ and $s_n = \pi\cos\left(\frac{n\pi}{16}\right)$.

Table 12 : An Example of RRC Configured Two Sub-codebooks

| Scenarios | Codebooks |
|---|---|
| Low-rise: $\theta \in \left[\frac{5\pi}{12}, \frac{7\pi}{12}\right]$ | Sub-codebook $W_{LR}$ |
| High-rise: $\theta \in \left(\frac{\pi}{6}, \frac{5\pi}{12}\right]$ | Sub-codebook $W_{HR}$ |

FIGURE 23 illustrates quantization of cosine values of the elevation angles according to embodiments of the present disclosure. The embodiment of the quantization of cosine values of the elevation angles shown in FIGURE 23 is for illustration only. Other embodiments could be used without departing from the scope of the disclosure.

FIGURE 23 plots $\theta$ versus $\cos\theta$ and the 'x' stands for the coordinate $(\cos\theta_i, \theta_i)$ satisfying $\cos\theta_i - \cos\theta_{i+1} = c$ for a constant $c$ and $i = 0, ...,31$. As evident in FIGURE 23, the elevation angles are not quantized uniformly. For applications such as multi-user MIMO (MU-MIMO), this non-uniform quantization may degrade performance. For example, when two users happen to have elevation angles in [0, 20] degrees, the two users' channels can be quantized with the same PMI index. In this case, NodeB 102 cannot MU-MIMO multiplex these two UEs, such as UE 115 and UE 116, together in the same time-frequency resource. The NodeB 102 is unable to MU-MIMO multiplex UE 115 and UE 116, not because the channel does not support the MU-MIMO multiplexing, but due to a lack of information.

To improve the performance, certain embodiments construct a rank-1 co-pol codebook by quantizing azimuth and elevation angles uniformly.

Codebook Construction

Certain embodiments quantize the elevation angle $\theta$ into $P_\theta$ equal quantization levels and quantize the azimuth angle $\varphi$ into $Q_\varphi$ equal quantization levels. The elevation angle can be $\theta \in [E_l, E_u)$ and the azimuth angle can be $\varphi \in [A_l, A_u)$, where $E_l$ and $E_u$ are the lower- and upper-limits of the elevation angle, respectively, and satisfy $0 \leq E_l < E_u \leq \pi$, and $A_l$ and $A_u$ are the lower- and upper-limits of the azimuth angle, respectively and satisfy $0 \leq A_l < A_u \leq 2\pi$. The feasible range of the elevation and azimuth angles may depend on factors such as UE distributions and antenna configurations.

The elevation precoding vector is given by:

$$f(v_m) := \left[1\ e^{-jv_m}, ..., e^{-j(M-1)v_m}\right]^T \text{ with } v_m = \frac{2\pi d_V}{\lambda_c}\cos\left(E_l + \frac{m(E_u - E_l)}{P_\theta}\right)$$
(84).

for $m = 0,1, ..., P_\theta - 1$, and the azimuth precoding vector is given by:

$$f(h_{m,n}) := \left[1\ e^{-jv_{n,m}}, \ldots, e^{-j(N-1)h_{m,n}}\right]^T$$

with

$$h_{m,n} = \frac{2\pi d_H}{\lambda_c} \sin\left(E_l + \frac{m(E_u - E_l)}{P_\theta}\right) \sin\left(A_l + \frac{n(A_u - A_l)}{Q_\varphi}\right)$$

$$(85).$$

for $m = 0,1, \ldots, P_\theta - 1$ and $n = 0,1, \ldots, Q_\varphi - 1$. The overall rank-1 $\boldsymbol{W}$ codebook can be expressed as

$$W = \left\{W_{m,n} = \beta f(v_m) \otimes f(h_{m,n}): m = 0,1, \ldots, P_\theta - 1,\ n = 0,1, \ldots, Q_\varphi - 1 \right\} \quad (86).$$

$\beta$ is a normalization factor. The number of codewords in this codebook is $P_\theta Q_\varphi$.

Codebook Construction Example 1: Consider a $8V \times 8H$ 2D URA (as shown in FIGURE 15A or FIGURE 17). Assume that the feasible ranges of elevation and azimuth angles are $\theta \in [0, \pi]$ and $\varphi \in [0, 2\pi]$. The values of parameters are given by $P_\theta = 4$, $Q_\varphi = 16$, which leads to a 2-bit vertical codebook and a 4-bit horizontal codebook. With plugging $d_H = d_V = 0.5\lambda_c$, the parameters $v_m = \pi \cos\frac{m\pi}{4}$ and $h_{m,n} = \pi \sin\frac{m\pi}{4} \sin\frac{2mn\pi}{16}$ with $m = 0,1, \ldots, 3$ and $n = 0, \ldots, 15$. A codeword $W_{m,n}$ is is given by:

$$W_{m,n} = \frac{1}{16} f(v_m) \otimes f(h_{m,n}) =$$

$$\frac{1}{16}\left[1 \quad q_{m,n} \quad \cdots \quad q_{m,n}^{15} \quad p_m \quad \cdots \quad p_m q_{m,n}^{15} \quad \cdots \quad p_m^{15} q_{m,n}^{15}\right]^T$$

$$(87).$$

where $p_m = e^{j\pi \cos\left(\frac{m\pi}{16}\right)}$ and $q_{m,n} = e^{j\pi \sin\left(\frac{m\pi}{16}\right) \sin\left(\frac{2mn\pi}{16}\right)}$.

PMI Feedback

For co-pol 2D antenna array, a v-PMI value of $m \in \{0,1, \cdots, P_\theta - 1\}$ and a h-PMI value of $n \in \{0,1, \cdots, Q_\varphi - 1\}$ corresponds to the codebook indices $m$ and $n$ given in Table 13. When configured with this PMI table, UE 116 needs to feeds back h-PMI $n$ and v- PMI $m$ to the NodeB 102.

Table 13 Codebook for 1-layer for co-pol 2D antenna array

| v-PMI $m$ | h-PMI $n$ | | | | | |
|---|---|---|---|---|---|---|
| | 0 | 1 | $\cdots$ | $n$ | $\ldots$ | $Q_\varphi$ - 1 |
| $m \in \{0,1, \cdots, P_\theta - 1\}$ | $W_{m,0}$ | $W_{m,1}$ | $\cdots$ | $W_{m,n}$ | $\cdots$ | $W_{m,Q_\varphi-1}$ |
| $W_{m,n} = \beta f(v_m) \otimes f(h_{nm})$ | | | | | | |

Embodiments of the present disclosure provide a method that the codebook for $\boldsymbol{X}$ is subset of

$$\left\{\begin{bmatrix} 1 \\ e^{\frac{j2\pi n}{16}} \end{bmatrix}, \ n = 0,1, \ldots, 15\right\},$$

where the subset comprises 8 distinct vectors indexed approximately same resolution for UE 116 located within angular spread around 90 degree as 4-bit codebook proposed in REF 3. As compared with FIGURE 5 (evenly oversampled DFT vectors), beam vectors in near 0 and 180 degrees (vectors represented by

$$\left\{\left[\begin{array}{c}1\\ e^{j\frac{2\pi n}{16}}\end{array}\right],\ n = 5,10\right\}$$

) with lower density. If UEs are densely located within small angular spread centering at 90 degree, our 3-bit codebook yields a similar performance as the evenly oversampled 4-bit 4-Tx DFT codebook.

Although the present disclosure has been described with an exemplary embodiment, various changes and modifications may be suggested to one skilled in the art. It is intended that the present disclosure encompass such changes and modifications as fall within the scope of the appended claims.

**Claims**

1. A method comprising:

   performing, by a base station, BS (102, 103), a precoding to a plurality of signals based on a codebook; and
   transmitting, by the BS (102, 103) via a two-dimensional, 2D, antenna array, the plurality of signals to at least one user equipment, UE (111-116),
   wherein the codebook is designed with one-dimensional 4-Tx and 2D antenna elements, and
   wherein the codebook comprises a rank 1 double codebook $W_1W_2$, and
   wherein the rank 1 double codebook includes an outer codebook $W_2$, and
   wherein co-phasing factors in the outer codebook $W_2$ are determined based on a beam selection index and a number of times of beams appearing in codewords of codebook $W_1$.

2. The method of claim 1, wherein transmitting comprising transmitting via the 2D antenna array comprising a number M of antenna elements and N antenna ports configured in a 2D grid NH x NV and wherein the codebook comprises a double codebook $W_1W_2$.

3. The method of claim 1, wherein transmitting comprising transmitting via the 2D antenna array comprising a number M of antenna elements and N antenna ports configured in a 2D grid NH x NV and wherein the codebook comprises a single codebook W.

4. The method of claim 1, wherein transmitting comprising transmitting via the 2D antenna array comprising a number M of antenna elements and N antenna ports configured in a 2D grid NH x NV and wherein the codebook comprises a rank 1 double codebook $W_1W_2$.

5. A base station (102, 103) for use in a wireless communication network, the base station (102, 103) comprising:

   a two dimensional, 2D, antenna array configured to communicate with at least one subscriber station;
   a controller configured to perform a precoding to a plurality of signals based on a codebook; and
   a transmitter configured to transmit the the plurality of signals to the at least one subscriber station (102, 103) via the 2D antenna array,
   wherein the codebook is designed with one-dimensional 4-Tx and 2D antenna elements, and
   wherein the codebook comprises a rank 1 double codebook $W_1W_2$, and
   wherein the rank 1 double codebook includes an outer codebook $W_2$, and
   wherein co-phasing factors in the outer codebook $W_2$ are determined based on a beam selection index and a number of times of beams appearing in codewords of codebook $W_1$.

6. The base station of claim 5, wherein the 2D antenna array comprises a 4-Tx antenna array and wherein the rank 1 double codebook further comprises an inner codebook $W_1$.

7. The base station of claim 5, wherein the 2D antenna array comprises a number M of antenna elements and N antenna ports configured in a 2D grid NH x NV.

8. The base station of claim 5, wherein the 2D antenna array comprises a number M of antenna elements and N antenna ports configured in a 2D grid NH x NV and wherein the codebook comprises a single codebook W .

9. The base station of claim 5, wherein the 2D antenna array comprises a number M of antenna elements and N antenna ports configured in a 2D grid NH x NV.

10. The method of claim 4 or the base station of claim 9, wherein the rank 1 codebook comprises non-evenly oversampled discrete fourier transform, DFT, vectors.

11. The method of claim 4 or the base station of claim 9, wherein the rank 1 double codebook comprises the vectors that are a Kronecker product of the horizontal steering vectors and the vertical steering vectors by uniformly quantizing the functions of elevation and azimuth angles.

12. The method or the base station of claim 11, wherein the rank 1 double codebook includes the Kronecker product of the horizontal and vertical steering vectors constructed by non-uniformly quantizing the functions of elevation and azimuth angles.

13. The method or the base station of claim 11, wherein the rank 1 double codebook comprises at least one of:

the horizontal and elevation steering vectors that use the dependency between elevation and azimuth angles; and
the horizontal and elevation steering vectors constructed by uniformly quantizing elevation and azimuth angles.

14. The method or the base station of claim 11, wherein the rank 1 double codebook is configurable for low-rise and high-rise scenarios.


**Patentansprüche**

1. Verfahren, umfassend:

Ausführen, durch eine Basisstation, BS (102, 103), einer Vorcodierung auf mehrere Signale basierend auf einem Codebuch; und
Senden der Vielzahl von Signalen durch die BS (102, 103) über ein zweidimensionales 2D-Antennenarray an mindestens ein Benutzergerät, UE (111-116),
wobei das Codebuch mit eindimensionalen 4-Tx- und 2D-Antennenelementen aufgebaut ist, und
wobei das Codebuch ein Rang-1-Doppelcodebuch $W_1W_2$ umfasst und
wobei das Rang-1-Doppelcodebuch ein äußeres Codebuch $W_2$ enthält und
wobei Co-Phasenfaktoren in dem äußeren Codebuch $W_2$ basierend auf einem Strahlauswahlindex und einer Anzahl von Malen, die Strahlen in Codewörtern des Codebuchs $W_1$ erscheinen, bestimmt werden.

2. Verfahren nach Anspruch 1, wobei das Senden das Senden über das 2D-Antennenarray umfasst, das eine Anzahl von M Antennenelementen und N Antennenanschlüssen umfasst, die in einem 2D-Gitter NH x NV konfiguriert sind, und wobei das Codebuch ein Doppelcodebuch $W_1W_2$ umfasst.

3. Verfahren nach Anspruch 1, wobei das Senden das Senden über das 2D-Antennenarray umfasst, das eine Anzahl von M Antennenelementen und N Antennenanschlüssen umfasst, die in einem 2D-Gitter NH x NV konfiguriert sind, und wobei das Codebuch ein einzelnes Codebuch W umfasst.

4. Verfahren nach Anspruch 1, wobei das Senden das Senden über das 2D-Antennenarray umfasst, das eine Anzahl von M Antennenelementen und N Antennenanschlüssen umfasst, die in einem 2D-Gitter NH x NV konfiguriert sind, und wobei das Codebuch ein Rang-1-Doppelcodebuch $W_1W_2$ umfasst.

5. Basisstation (102, 103) zur Verwendung in einem drahtlosen Kommunikationsnetz, die Basisstation (102, 103) umfassend:

ein zweidimensionales 2D-Antennenarray, das konfiguriert ist, um mit mindestens einer Teilnehmerstation zu kommunizieren;
eine Steuerung, die konfiguriert ist, um eine Vorcodierung auf eine Vielzahl von Signalen basierend auf einem Codebuch auszuführen; und
einen Sender, der konfiguriert ist, um die mehreren Signale über das 2D-Antennenarray an die mindestens eine Teilnehmerstation (102, 103) zu senden, wobei das Codebuch mit eindimensionalen 4-Tx- und 2D-Antennenelementen aufgebaut ist, und

wobei das Codebuch ein Rang-1-Doppelcodebuch $W_1W_2$ umfasst und

wobei das Rang-1-Doppelcodebuch ein äußeres Codebuch $W_2$ enthält und wobei Co-Phasenfaktoren in dem äußeren Codebuch $W_2$ basierend auf einem Strahlauswahlindex und einer Anzahl von Malen, die Strahlen in Codewörtern des Codebuchs $W_1$ erscheinen, bestimmt werden.

6.  Basisstation nach Anspruch 5, wobei das 2D-Antennenarray ein 4-Tx-Antennenarray umfasst und wobei das Rang-1-Doppelcodebuch ferner ein inneres Codebuch $W_1$ umfasst.

7.  Basisstation nach Anspruch 5, wobei das 2D-Antennenarray eine Anzahl von M Antennenelementen und N Antennenanschlüssen umfasst, die in einem 2D-Gitter NH x NV konfiguriert sind.

8.  Basisstation nach Anspruch 5, wobei das 2D-Antennenarray eine Anzahl von M Antennenelementen und N Antennenanschlüssen umfasst, die in einem 2D-Gitter NH x NV konfiguriert sind, und wobei das Codebuch ein einzelnes Codebuch W umfasst.

9.  Basisstation nach Anspruch 5, wobei das 2D-Antennenarray eine Anzahl von M Antennenelementen und N Antennenanschlüssen umfasst, die in einem 2D-Gitter NH x NV konfiguriert sind.

10. Verfahren nach Anspruch 4 oder Basisstation nach Anspruch 9, wobei das Rang-1-Codebuch nicht gleichmäßig überabgetastete Diskrete Fourier-Transformations (DFT)-Vektoren umfasst.

11. Verfahren nach Anspruch 4 oder Basisstation nach Anspruch 9, wobei das Rang-1-Doppelcodebuch die Vektoren umfasst, die ein Kronecker-Produkt der horizontalen Lenkvektoren und der vertikalen Lenkvektoren sind, indem die Funktionen von Elevations- und Azimutwinkeln gleichmäßig quantisiert werden.

12. Verfahren oder Basisstation nach Anspruch 11, wobei das Rang-1-Doppelcodebuch das Kronecker-Produkt der horizontalen und vertikalen Lenkvektoren enthält, die durch ungleichmäßiges Quantisieren der Funktionen von Elevations- und Azimutwinkeln konstruiert sind.

13. Verfahren oder Basisstation nach Anspruch 11, wobei das Rang-1-Doppelcodebuch mindestens eines von Folgendem umfasst:

    die horizontalen und Elevationslenkvektoren, die die Abhängigkeit zwischen Elevations- und Azimutwinkeln verwenden; und
    die horizontalen und Elevationslenkvektoren, die durch gleichmäßiges Quantisieren der Elevations- und Azimutwinkel konstruiert werden.

14. Verfahren oder Basisstation nach Anspruch 11, wobei das Rang-1-Doppelcodebuch für Szenarien mit niedrigem Anstieg und hohem Anstieg konfigurierbar ist.


**Revendications**

1.  Procédé comprenant :

    effectuer, par une station de base, BS (102, 103), un précodage à une pluralité de signaux sur la base d'un livre de codes ; et
    transmettre, par la BS (102, 103) par l'intermédiaire d'un réseau d'antennes bidimensionnelles, 2D, la pluralité de signaux à au moins un équipement d'utilisateur, UE (111-116),
    où le livre de codes est conçu avec des éléments d'antenne 4-Tx unidimensionnelle et des éléments d'antenne 2D, et
    où le livre de codes comprend un double livre de codes de rang 1 $W_1W_2$, et
    où le double livre de codes de rang 1 comprend un livre de codes externe $W_2$, et
    où des facteurs de co-phasage dans le livre de codes externe $W_2$ sont déterminés sur la base d'un indice de sélection de faisceau et d'un nombre de fois que les faisceaux apparaissent dans des mots de code du livre de codes $W_1$.

**2.** Procédé selon la revendication 1, où la transmission comprend la transmission par l'intermédiaire du réseau d'antennes 2D comprenant un nombre M d'éléments d'antenne et N ports d'antenne configurés dans une grille 2D NH x NV et où le livre de codes comprend un double livre de codes $W_1W_2$.

**3.** Procédé selon la revendication 1, où la transmission comprend la transmission par l'intermédiaire du réseau d'antennes 2D comprenant un nombre M d'éléments d'antenne et N ports d'antenne configurés dans une grille 2D NH x NV et où le livre de codes comprend un seul livre de codes W.

**4.** Procédé selon la revendication 1, où la transmission comprend la transmission par l'intermédiaire du réseau d'antennes 2D comprenant un nombre M d'éléments d'antenne et N ports d'antenne configurés dans une grille 2D NH x NV et où le livre de codes comprend un double livre de codes de rang 1 $W_1W_2$.

**5.** Station de base (102, 103) destinée à être utilisée dans un réseau de communication sans fil, la station de base (102, 103) comprenant :

un réseau d'antennes bidimensionnelles, 2D, configuré pour communiquer avec au moins une station d'abonné ;
un contrôleur configuré pour effectuer un précodage d'une pluralité de signaux sur la base d'un livre de codes ; et
un émetteur configuré pour transmettre la pluralité de signaux à l'au moins une station d'abonné (102, 103) par l'intermédiaire du réseau d'antennes 2D,
où le livre de codes est conçu avec des éléments d'antenne unidimensionnelle 4-Tx et des éléments d'antenne 2D, et
où le livre de codes comprend un double livre de codes de rang 1 $W_1W_2$, et
où le double livre de codes de rang 1 comprend un livre de codes externe $W_2$, et
où des facteurs de co-phasage dans le livre de codes externe $W_2$ sont déterminés sur la base d'un indice de sélection de faisceau et d'un nombre de fois que les faisceaux apparaissent dans des mots de code du livre de codes $W_1$.

**6.** Station de base selon la revendication 5, où le réseau d'antennes 2D comprend un réseau d'antennes 4-Tx et où le double livre de codes de rang 1 comprend en outre un livre de codes interne $W_1$.

**7.** Station de base selon la revendication 5, où le réseau d'antennes 2D comprend un nombre M d'éléments d'antenne et un nombre N de ports d'antenne configurés dans une grille 2D NH x NV.

**8.** Station de base selon la revendication 5, où le réseau d'antenne 2D comprend un nombre M d'éléments d'antenne et N ports d'antenne configurés dans une grille 2D NH x NV et où le livre de codes comprend un seul livre de codes W.

**9.** Station de base selon la revendication 5, où le réseau d'antenne 2D comprend un nombre M d'éléments d'antenne et N ports d'antenne configurés dans une grille 2D NH x NV.

**10.** Procédé selon la revendication 4 ou station de base selon la revendication 9, où le livre de codes de rang 1 comprend des vecteurs de transformée de Fourier discrète, DFT, sur-échantillonnés de manière non-uniforme.

**11.** Procédé selon la revendication 4 ou station de base selon la revendication 9, où le double livre de codes de rang 1 comprend les vecteurs qui sont un produit de Kronecker des vecteurs de direction horizontale et des vecteurs de direction verticale en quantifiant de manière uniforme les fonctions d'angles d'élévation et d'azimut.

**12.** Procédé ou station de base selon la revendication 11, où le double livre de codes de rang 1 comprend le produit de Kronecker des vecteurs de direction horizontale et verticale construits en quantifiant de manière non uniforme les fonctions des angles d'élévation et d'azimut.

**13.** Procédé ou station de base selon la revendication 11, où le double livre de codes de rang 1 comprend au moins l'un des éléments suivants :

les vecteurs de direction horizontale et d'élévation qui utilisent la dépendance entre les angles d'élévation et d'azimut ; et
les vecteurs de direction horizontale et d'élévation construits en quantifiant de manière uniforme les angles d'élévation et d'azimut.

14. Procédé ou station de base selon la revendication 11, où le double livre de codes de rang 1 est configurable pour des scénarios de faible hauteur et de grande hauteur.

FIG.1

FIG.2A

FIG.2B

116

330                325                    310          305

| SPEAKER | ← | RX PROCESSING CIRCUITRY | ← | RF TRANSCEIVER |

320                315

| MICROPHONE | → | TX PROCESSING CIRCUITRY |

345                         340              350

| I/O IF | ↔ | MAIN PROCESSOR | ← | KEYPAD |
| | | | → | DISPLAY |

355

MEMORY

| BASIC OPERATING SYSTEM | ~361 |

~360

| APPLICATIONS | ~362 |

# FIG.3

FIG.4

FIG.5

EVENLY OVERSAMPLED DFT VECTORS (4-BITS & ERICSSON) 700

## FIG.6

## FIG.7

FIG.8A

FIG.8B

FIG.9

1510 . . . . 1515 1500

(M-1,0) (M-1,1) . . . . (M-1,N-1) -45° +45°

(1,0) (1,1) . . . . (1,N-1)

(0,0) (0,1) . . . . (0,N-1)

AP 0, AP 1, AP N/2-1,
AP N/2 AP N/2+1 AP N-1

# FIG.10

1600

1610 1620

$X_1$ → TRANSMITTER PRECODING MATRIX W → ⋈ → MIMO RECEIVER → $\hat{X}_1$

$X_2$ → → $\hat{X}_2$

FEEDBACK PRECODING MATRIX INDEX (PMI)

# FIG.11

NONEVENLY OVERSAMPLED DFT VECTORS (3-BITS)

FIG.12

EVENLY OVERSAMPLED DFT VECTORS (3-BITS)

FIG.13

FIG.14

## FIG.15A

## FIG.15B

FIG.16

FIG.17

FIG.18

FIG.19

## FIG.20

## FIG.21

FIG.22

FIG.23

**EP 2 965 444 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009322613 A1
- US 2012039251 A1
- US 2013010880 A1